# EUROPEAN PATENT SPECIFICATION

(11) **EP 4 542 334 B1**
(45) Date of publication and mention of the grant of the patent: **03.12.2025**
(21) Application number: 24736294.0
(22) Date of filing: 11.06.2024
(51) Int. Cl.: G06F 1/16

(54) **ELECTRONIC DEVICE INCLUDING PROTECTIVE COVER FOR PROTECTING DISPLAY**
ELEKTRONISCHE VORRICHTUNG MIT SCHUTZABDECKUNG ZUM SCHUTZ EINER ANZEIGE
DISPOSITIF ÉLECTRONIQUE COMPRENANT UN COUVERCLE DE PROTECTION POUR PROTÉGER UN ÉCRAN

(30) Priority: 28.08.2023 KR 20230113220; 04.10.2023 KR 20230131491
(43) Date of publication of application: 23.04.2025
(73) Proprietor: Samsung Electronics Co., Ltd., Suwon-si, Gyeonggi-do 16677 (KR)
(72) Inventor: KIM, Sungkwang, Yeongtong-gu, Suwon-si Gyeonggi-do 16677 (KR); KIM, Hun, Yeongtong-gu, Suwon-si Gyeonggi-do 16677 (KR); CHOI, Hyunsuk, Yeongtong-gu, Suwon-si Gyeonggi-do 16677 (KR)
(74) Representative: Nederlandsch Octrooibureau
(86) International application number: PCT/KR2024/008007
(87) International publication number: WO 2025/048152

(56) References cited:
- EP-A1- 4 227 763
- CN-A- 105 204 572
- KR-A- 20200 055 618
- KR-A- 20230 011 224
- KR-A- 20230 040 220
- KR-A- 20230 040 220
- KR-A- 20230 066 739
- US-A1- 2024 205 323

## Description

### [Technical Field]

Various embodiments of the disclosure relate to an electronic device including a protective cover for protecting a display.

### [Background Art]

Development of technologies in the areas of electronics, information and communication has fueled integration of various functionalities into a single electronic device or portable communication device. For example, smartphones pack the functionalities of a music player, imaging device, and scheduler, as well as the communication functionality (e.g., telephone) and additional functionalities may be installed in a form of applications.

With the increase in use and popularity of smartphones or other personal/portable communication devices, demand for new functions and convenience is also on the rise. For example, a touchscreen display may not only serve as an output device of visual information but also provide a virtual keyboard that replaces a mechanical input device (e.g., a button input device). As such, portable communication devices or electronic devices may be made more compact while delivering further enhanced applicability (e.g., a larger screen). Flexible displays, e.g., foldable or rollable displays, are expected to enter the commerce, and the electronic devices are expected to deliver better functionality, portability, and convenience.

KR 2023 0040220 A relates to an electronic device including a protective member for a display.

### [Disclosure of Disclosure]

### [Solution To Problems]

An electronic device adopting a foldable device may include a flexible display. At least a portion of the flexible display may contact each other in a folding state of the electronic device.

When portions of the flexible display contact each other in the folding state of the electronic device, the flexible display may get damaged (e.g., scratched or cracked). To prevent this, the electronic device may include a protective cover disposed along an edge of the display and an elastic buffer member disposed on the protective cover.

Generally, a buffer member may be fitted into the protective cover in a hooking manner and then fixed. The hooking-type buffer member may come off (e.g., displace, shift, or move) the protective cover by external force in a vertical direction (e.g., vertical force) or external force in a horizontal direction (e.g., shear force) applied to the buffer member.

Various embodiments of the disclosure may provide an electronic device including a buffer member including a pair of hooking parts.

A foldable electronic device according to one embodiment of the disclosure includes a first housing, a second housing rotatably connected to the first housing by a hinge module, a protective cover coupled along edges of housings and including a pair of through holes and a fixing portion provided between the pair of through holes and, a buffer member including a pair of hooking parts inserted into the pair of through holes and disposed to surround the fixing portion, and the pair of hooking parts include each locking protrusion disposed to cross each other such that at least a portion of the each locking protrusion is configured to overlap each other.

According to various embodiments of the disclosure, the buffer member may be coupled to the protective cover in a state in which the pair of hooking parts are disposed to cross each other to surround the hooking parts of the protective cover. Further, if the buffer member and the protective cover are coupled to each other, a fastening protrusion and a fastening hole respectively provided in the pair of hooking parts may be fitted together. Accordingly, the coupling force of the buffer member fastened to the protective member for the display may be enhanced.

Effects of the disclosure are not limited to the foregoing, and other unmentioned effects would be apparent to one of ordinary skill in the art from the following description. In other words, unintended effects in practicing embodiments of the disclosure may also be derived by one of ordinary skill in the art from the embodiments of the disclosure.

### [Brief Description of Drawings]

The above and other aspects, features, and advantages of certain embodiments of the disclosure will be more apparent from the following description taken in conjunction with the accompanying drawings, in which:
FIG. 1 is a view illustrating an electronic device in a network environment according to various embodiments;
FIG. 2A is a perspective view illustrating an electronic device in a flat state or unfolding state according to an embodiment of the disclosure;
FIG. 2B is a plan view illustrating a front side of an electronic device in an unfolding state according to an embodiment of the disclosure;
FIG. 2C is a plan view illustrating a rear side of an electronic device in an unfolding state according to an embodiment of the disclosure;
FIG. 3A is a perspective view illustrating an electronic device in a folding state according to an embodiment of the disclosure;
FIG. 3B is a perspective view illustrating an electronic device in an intermediate state according to an embodiment of the disclosure;
FIG. 4 is an exploded perspective view illustrating an electronic device according to an embodiment of the disclosure;
FIG. 5 is a perspective view illustrating a coupled state of a protective cover and a buffer member according to an embodiment;
FIG. 6 is a perspective view illustrating a buffer member according to an embodiment;
FIG. 7 is a front view illustrating a buffer member according to an embodiment;
FIG. 8 is a view illustrating a process of coupling a protective cover and a buffer member according to an embodiment;
FIG. 9 is a perspective view illustrating a coupled state of a buffer member, a protective cover, and a housing according to an embodiment;
FIG. 10 is a perspective view illustrating a process of fastening between locking protrusions according to an embodiment;
FIG. 11 is a perspective view illustrating a fastened state of hooking parts according to an embodiment;
FIG. 12 is a plan view illustrating a buffer member according to an embodiment;
FIG. 13 is a perspective view illustrating a portion of a buffer member according to an embodiment;
FIG. 14 is a plan view illustrating a portion of a buffer member according to an embodiment;
FIG. 15 is a front view illustrating a portion of a buffer member according to an embodiment;
FIGS. 16A, 16B, and 16C are views illustrating a moving path of a bonding member according to an embodiment;
FIG. 17 is a front view illustrating a buffer member according to an embodiment;
FIG. 18 is a perspective view illustrating a buffer member according to an embodiment; and
FIG. 19 is a perspective view illustrating a coupled state of a protective cover and a buffer member according to an embodiment.

### [Mode for the Disclosure]

It should be appreciated that various embodiments of the disclosure and the terms used therein are not intended to limit the technological features set forth herein to particular embodiments and include various changes, equivalents, or replacements for a corresponding embodiment.

With regard to the description of the drawings, similar reference numerals (or reference signs) may be used to refer to similar or related elements.

It is to be understood that a singular form of a noun corresponding to an item may include one or more of the things, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases.

As used herein, such terms as "1st" and "2nd," or "first" and "second" may be used to simply distinguish a corresponding component from another and does not limit the components in other aspect (e.g., importance or order).

It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

It will be further understood that the terms "comprise" and/or "have," as used herein, specify the presence of stated features, integers, steps, operations, elements, and/or components, but do not preclude the presence or addition of one or more other features, integers, steps, operations, elements, components, and/or groups thereof.

It will be understood that if a component is referred to as "connected to," "coupled to", "supported on," or "contacting" another component, the components may be connected to, coupled to, supported on, or contact each other directly or via a third component.

As used herein, the term "side" with respect to, for example, "first side," "lateral side," or "exposed side," may be interchangeably used with, referred to as, include, or mean "surface," "side surface," or "surface of a side."

Throughout the specification, if one component is located "on" another component, the first component may be located directly on the second component, or other component(s) may be located between the first and second component.

The term "and/or" may denote a combination(s) of a plurality of related components as listed or any of the components.

Hereinafter, the working principle and embodiments of the disclosure are described with reference to the accompanying drawings.

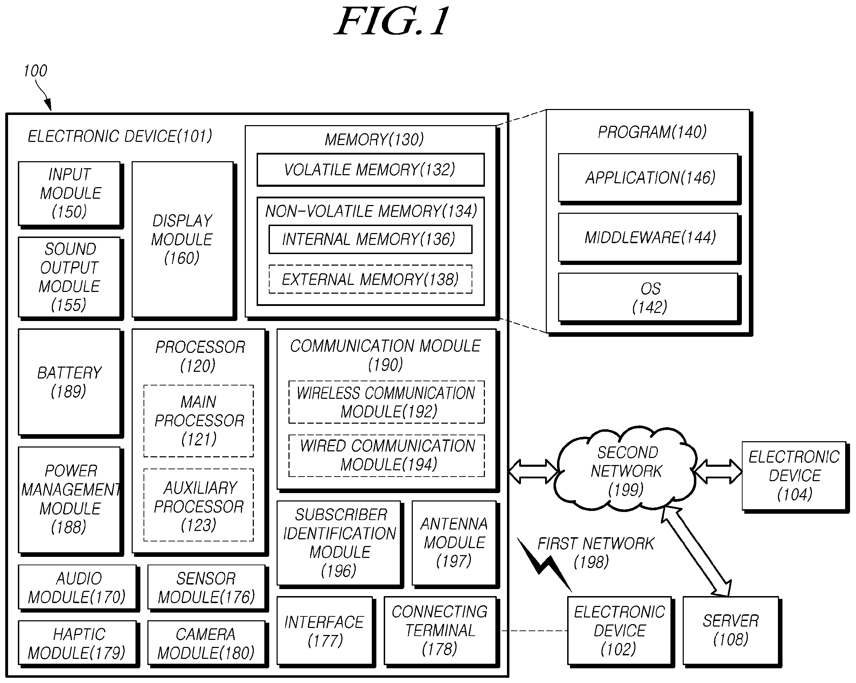

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120 and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150 or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as BluetoothTM, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductive body or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first side (e.g., the bottom side) of the printed circuit board, or adjacent to the first surface and capable of supporting a designated high-frequency band (e.g., the mmWave band), and a plurality of antennas (e.g., array antennas) disposed on a second side (e.g., the top or a lateral side) of the printed circuit board, or adjacent to the second side and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra-low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

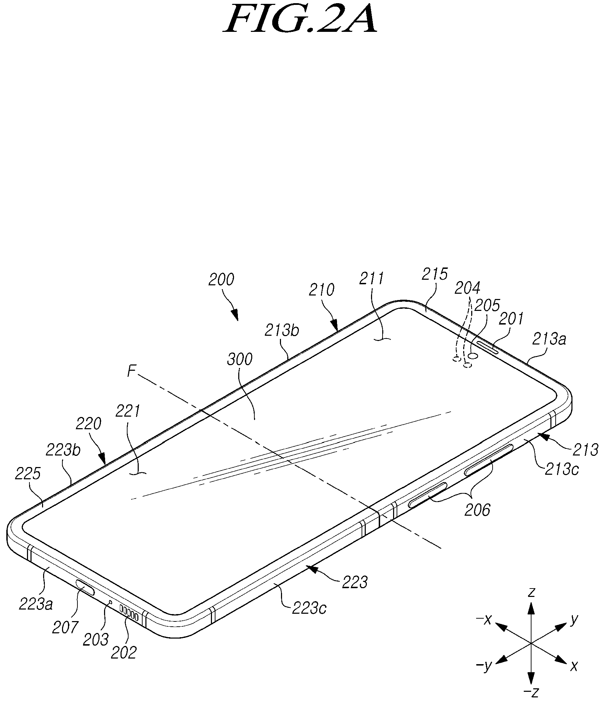

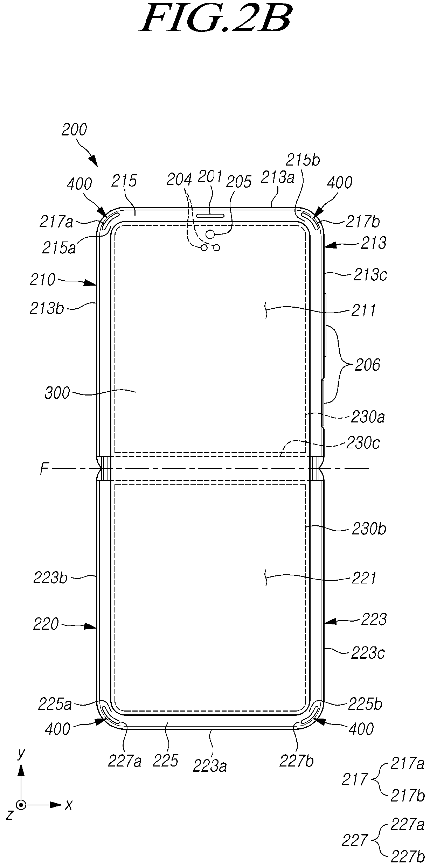

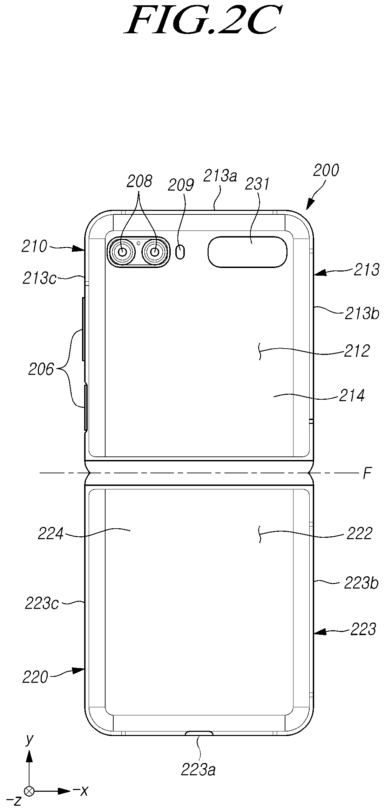

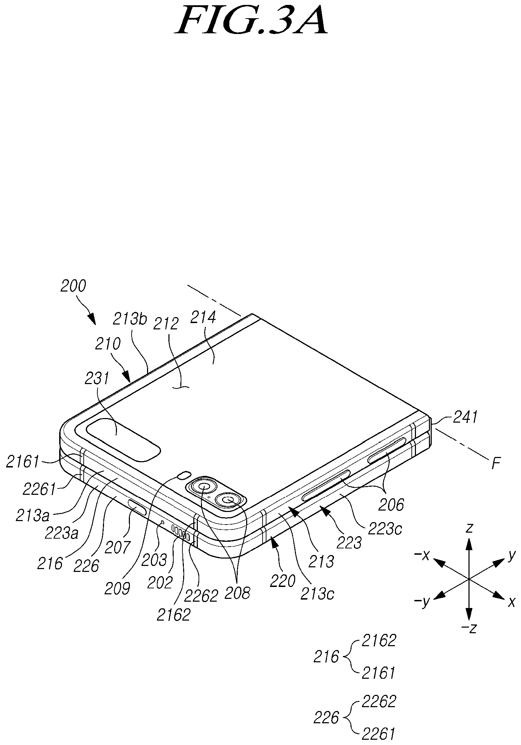

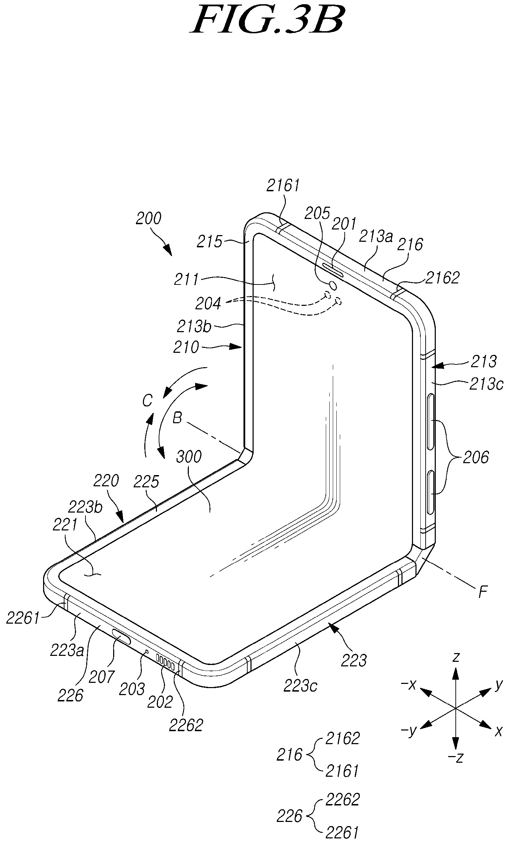

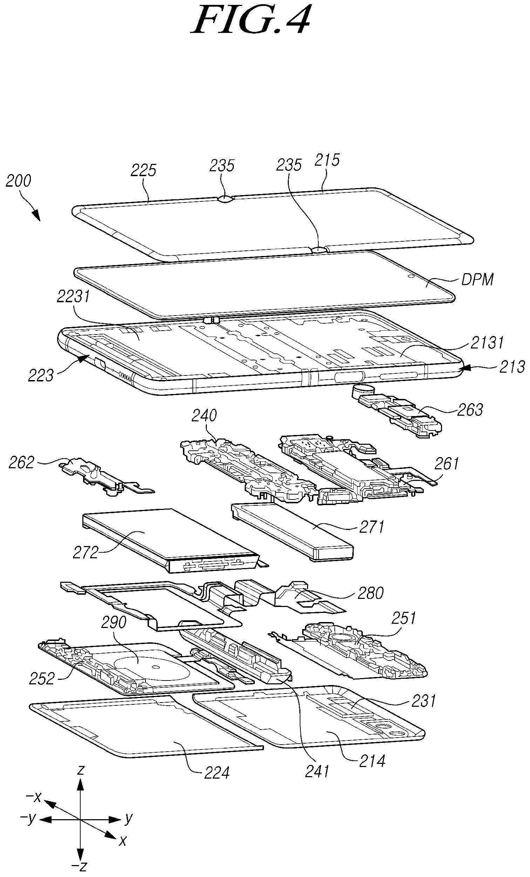

FIG. 2A is a perspective view illustrating an electronic device in a flat state or unfolding state according to an embodiment of the disclosure. FIG. 2B is a plan view illustrating a front side of an electronic device in an unfolding state according to an embodiment of the disclosure. FIG. 2C is a plan view illustrating a rear side of an electronic device in an unfolding state according to an embodiment of the disclosure. FIG. 3A is a perspective view illustrating an electronic device in a folding state according to an embodiment of the disclosure. FIG. 3B is a perspective view illustrating an electronic device in an intermediate state according to an embodiment of the disclosure. FIG. 4 is an exploded perspective view illustrating an electronic device according to an embodiment of the disclosure.

Referring to FIGS. 2A to 4, an electronic device 200 includes a pair of housings 210 and 220 (e.g., a foldable housing) rotatably coupled to be folded about a hinge module 240 while facing each other. According to an embodiment, the electronic device 200 may include a flexible display 300 (e.g., the display module 160 of FIG. 1) disposed in an area formed by the pair of housings (210 and 220). According to an embodiment, the first housing 210 and the second housing 220 may be disposed on two (2) opposite sides of the folding axis (axis F) and be substantially symmetrical in shape with respect to the folding axis (e.g., axis F). According to an embodiment, the first housing 210 and the second housing 220 may form different angles or distances depending on whether the foldable electronic device 200 is in an unfolding state (or flat state), a folding state, or an intermediate state.

The pair of housings 210 and 220 includes a first housing 210 (e.g., a first housing structure) coupled to the hinge module 240 and a second housing 220 (e.g., a second housing structure) coupled to the hinge module 240. According to an embodiment, the first housing 210 may include a first side 211 facing in a first direction (e.g., front direction) (z-axis direction) and a second side 212 facing in a second direction (e.g., rear direction) (-z-axis direction) opposite to the first side 211, in the unfolding state.

According to an embodiment, the second housing 220 may include a third side 221 facing in the first direction (z-axis direction) and a fourth side 222 facing in the second direction (-z-axis direction), in the unfolding state. According to an embodiment, the electronic device 200 may be operated in such a manner where in the unfolding state, the first side 211 of the first housing 210 and the third side 221 of the second housing 220 face in substantially the same first direction (z-axis direction) and, in the folding state, the first side 211 and the third side 221 face each other.

According to an embodiment, the foldable electronic device 200 may be operated in such a manner where in the unfolding state, the second side 212 of the first housing 210 and the fourth side 222 of the second housing 220 face in substantially the same second direction (-z-axis direction) and, in the folding state, the second side 212 and the fourth side 222 face in opposite directions to each other. For example, in the folding state, the second side 212 may face in the first direction (z-axis direction), and the fourth side 222 may face in the second direction (-z-axis direction).

According to an embodiment, the first housing 210 may include a first side frame 213 at least partially forming the appearance of the electronic device 200 and a first rear cover 214 coupled with the first side frame 213 and forming at least a portion of the second side 212 of the electronic device 200. According to an embodiment, the first side frame 213 may include a first lateral side 213a, a second lateral side 213b extending from one end of the first lateral side 213a, and a third lateral side 213c extending from the other end of the first lateral side 213a. According to an embodiment, the first side frame 213 may be formed in a rectangular (or square) shape through the first lateral side surface 213a, the second lateral side 213b, and the third lateral side 213c.

According to an embodiment, the second housing 220 may include a second side frame 223 at least partially forming the appearance of the electronic device 200 and a second rear cover 224 coupled with the second side frame 223 and forming at least a portion of the fourth surface 222 of the electronic device 200. According to an embodiment, the second side frame 223 may include a fourth lateral side 223a, a fifth lateral side 223b extending from one end of the fourth lateral side 223b, and a sixth lateral side 223c extending from the other end of the fourth lateral side 223a. According to an embodiment, the second side frame 223 may be formed in a rectangular shape through the fourth lateral side 223a, the fifth lateral side 223b, and the sixth lateral side 223c.

According to an embodiment, the pair of housings (210 and 220) is not limited to the shape and coupling shown but may rather be implemented in other shapes or via a combination and/or coupling of other components. For example, in an embodiment, the first side frame 213 may be integrally formed with the first rear cover 214, and the second side frame 223 may be integrally formed with the second rear cover 224.

According to an embodiment, in the unfolding state of the electronic device 200, the second lateral side 213b of the first side frame 213 may be connected with the fifth lateral side 223b of the second side frame 223 without a gap. According to an embodiment, in the unfolding state of the electronic device 200, the third lateral side 213c of the first side frame 213 may be connected with the sixth lateral side 223c of the second side frame 223 without a gap. According to an embodiment, in the unfolding state of the electronic device 200, the sum of the lengths of the second lateral side 213b and the fifth lateral side 223b may be configured to be larger than the length of the first lateral side 213a and/or the fourth lateral side 223a. Further, the sum of the lengths of the third lateral side 213c and the sixth lateral side 223c may be configured to be larger than the length of the first lateral side 213a and/or the fourth lateral side 223a.

According to an embodiment, the first side frame 213 and/or the second side frame 223 may be formed of metal or may further include a polymer injected into the metal. According to an embodiment, the first side frame 213 and/or the second side frame 223 may include at least one conductive portion 216 and/or 226 electrically segmented through at least one segmenter 2161, 2162, and/or 2261 or 2262 formed of a polymer. In this case, the at least one conductive portion may be electrically connected with a wireless communication circuit included in the electronic device 200 and be thus used as an antenna operating in at least one designated band (e.g., a legacy band).

According to an embodiment, the first rear cover 214 and/or the second rear cover 224 may be formed of at least one of, or a combination of at least two of, laminated or colored glass, ceramic, polymer, or metal (e.g., aluminum, stainless steel, or magnesium).

According to an embodiment, the flexible display 300 may be disposed from the first side 211 of the first housing 210 across the hinge module 240 up to at least a portion of the third side 221 of the second housing 220. For example, the flexible display 300 may include a first flat portion 230a substantially corresponding to the first side 211, a second flat portion 230b corresponding to the third side 221, and a bendable portion 230c connecting the first flat portion 230a and the second flat portion 230b and corresponding to the hinge module 240.

According to an embodiment, the electronic device 200 includes a first protective cover 215 (e.g., first protective frame or first decoration member) coupled along the edge of the first housing 210. According to an embodiment, the electronic device 200 may include a second protective cover 225 (e.g., second protective frame or second decoration member) coupled along the edge of the second housing 220. According to an embodiment, the first protective cover 215 and/or the second protective cover 225 may be formed of a metal or polymer material. According to an embodiment, the first protective cover 215 and/or the second protective cover 225 may be used as a decoration member.

According to an embodiment, the electronic device 200 includes a buffer member 400 (or a damper) disposed in corner portions (215a and 215b) and/or (225a and 225b) of the first protective cover 215 and/or the second protective cover 225.

In an embodiment, the buffer member 400 may contact the other protective cover (e.g., the first protective cover 215 or the second protective cover 225) facing the buffer member 400 in the folding state of the electronic device 200 or contact the other protective cover (215 or 225), having the buffer member 400 disposed thereon. In this case, in the folding state of the electronic device 200, at least a portion of the first side 211 and the third side 221 of the display 300 may be prevented from contacting each other, protecting the display 300.

In an embodiment, the buffer member 400 may be formed of a material that has elasticity and is resistant to wear. For example, the buffer member 400 may be formed of rubber, but the disclosure is not limited thereto.

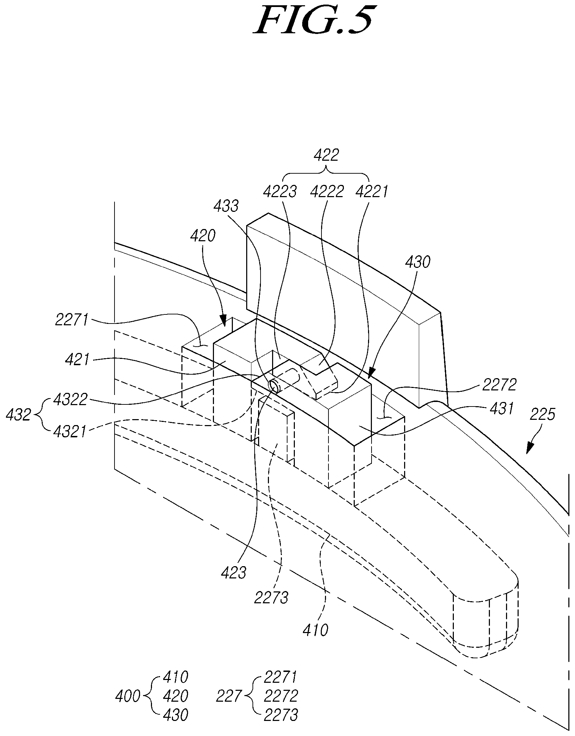

A specific shape and/or structure of the buffer member 400 is described below with reference to FIGS. 5 to 7.

According to an embodiment, the first protective cover 215 may include a first damper receiving portion 217 provided in the corner portion 215a or 215b of the first protective cover 215 and coupled with the buffer member 400. In an embodiment, the first damper receiving portion 217 may include a 1-1th receiving portion 217a formed in the left corner 215a of the first protective cover 215 and a 1-2th receiving portion 217b positioned in the right corner 215b of the first protective cover 215 when the electronic device 200 is viewed from there above (e.g., +z-axis direction).

According to an embodiment, the second protective cover 225 may include a second damper receiving portion 227 provided in the corner portion 225a or 225b of the second protective cover 225 and coupled with the buffer member 400. In an embodiment, the second damper receiving portion 227 may include a 2-1th receiving portion 227a formed in the left corner 225a of the second protective cover 225 and a 2-2th receiving portion 227b positioned in the right corner 225b of the second protective cover 225 when the electronic device 200 is viewed from there above (e.g., +z-axis direction).

According to an embodiment, the flexible display 300 may be positioned such that an edge of the first flat portion 230a is interposed (or positioned) between the first housing 210 and the first protective cover 215. According to an embodiment, the flexible display 300 may be positioned such that an edge of the second flat portion 230b is interposed between the second housing 220 and the second protective cover 225. According to an embodiment, the flexible display 300 may be positioned such that the edge of the flexible display 300 corresponding to a protective cap 235 is protected through the protective cap 235 disposed in the area corresponding to the hinge module 240. Accordingly, the edge of the flexible display 300 may be substantially protected from the outside.

According to an embodiment, the electronic device 200 may include a hinge housing 241 (e.g., hinge cover) that supports the hinge module 240 and is disposed to be exposed to the outside in the folding state of the electronic device 200 and, in the unfolding state of the electronic device 200, is drawn in a first space and a second space not to be seen from the outside.

According to an embodiment, the electronic device 200 may include a sub-display 231 (e.g., a second display) disposed separately from the flexible display 300 (e.g., a first display). According to an embodiment, as the sub-display 231 is disposed on the second side 212 of the first housing 210 to be at least partially exposed, the sub-display 231 may display status information about the electronic device 200 which replaces the display function of the flexible display 300, in the folding state. According to an embodiment, the sub-display 231 may be disposed to be viewed from the outside through at least a partial area of the first rear cover 214. In an embodiment, the sub-display 231 may be disposed on the fourth side 222 of the second housing 220. In this case, the sub-display 231 may be disposed to be visible from the outside through at least a partial area of the second rear cover 224.

According to an embodiment, the electronic device 200 may include at least one of an input device (e.g., a microphone), sound output devices (201 and 202), a sensor module 204, a camera device (e.g., the first camera device 205 and/or the second camera device 208), a key input device 206, or a connector port 207. In the illustrated embodiment, the input device (e.g., the microphone), sound output devices (201 and 202), the sensor module 204, the camera device (e.g., the first camera device 205 and/or the second camera device 208), the key input device 206, or the connector port 207 refer to a hole or shape formed in the first housing 210 or the second housing 220, but may be defined to include a substantial electronic component (e.g., an input device, a sound output device, a sensor module, or a camera device) disposed inside the electronic device 200 and operating through the hole or shape.

According to an embodiment, the input device may include at least one microphone 203 disposed in the second housing 220. In an embodiment, the input device may include a plurality of microphones 203 disposed to detect the direction of the sound. In an embodiment, the plurality of microphones 203 may be disposed at appropriate positions in the first housing 210 and/or the second housing 220. According to an embodiment, the sound output devices (201 and 202) may include speakers. According to an embodiment, the speakers may include a call receiver 201 disposed in the first housing 210 and a speaker 202 disposed in the second housing 220. In an embodiment, the input device, the sound output devices (201 and 202), and the connector port 207 may be disposed in a space provided in the first housing 210 and/or the second housing 220 of the electronic device 200 and may be exposed to an external environment through at least one hole formed in the first housing 210 and/or the second housing 220. According to an embodiment, the at least one connector port 207 may be used to transmit and receive power and/or data to and from an external electronic device. In an embodiment, at least one connector port (e.g., an ear jack hole) may receive a connector (e.g., an ear jack) for transmitting and receiving an audio signal to and from an external electronic device. In an embodiment, the holes formed in the first housing 210 and/or the second housing 220 may be commonly used for the input device and the sound output devices (201 and 202). In an embodiment, the sound output devices (201 and 202) may include speakers (e.g., piezo speakers) that operate without holes formed in the first housing 210 and/or the second housing 220.

According to an embodiment, the sensor modules 204 may generate an electrical signal or data value corresponding to an internal operating state or external environmental state of the electronic device 200. The sensor module 204 may detect, e.g., an external environment through the first side 211 of the first housing 210. In an embodiment, the electronic device 200 may further include at least one sensor module disposed to detect an external environment through the second side 212 of the first housing 210. According to an embodiment, the sensor module 204 (e.g., an illuminance sensor) may be disposed under the flexible display 300 to detect an external environment through the flexible display 300. According to an embodiment, the sensor module 204 may include at least one of a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, an illuminance sensor, a proximity sensor, a biometric sensor, an ultrasonic sensor, or an illuminance sensor.

According to an embodiment, a camera device (e.g., the first camera device 205 and/or the second camera device 208) may include a first camera device 205 (e.g., a front camera device) disposed on the first side 211 of the first housing 210 and a second camera device 208 disposed on the second side 212 of the first housing 210. The electronic device 200 may further include a flash 209 disposed near the second camera device 208. According to an embodiment, the camera device (e.g., the first camera device 205 and/or the second camera device 208) may include one or more lenses, an image sensor, and/or an image signal processor. The flash 209 may include, e.g., a light emitting diode (LED) or a xenon lamp. According to an embodiment, the camera device (e.g., the first camera device 205 and/or the second camera device 208) may be disposed so that two or more lenses (a wide-angle lens, an ultra-wide-angle lens, or a telephoto lens) and image sensors are positioned on one side (e.g., the first side 211, the second side 212, the third side 221, or the fourth side 222) of the electronic device 200. In an embodiment, the camera device (e.g., the first camera device 205 and/or the second camera device 208) may include time of flight lenses and an image sensor.

According to an embodiment, the key input device 206 (e.g., a key button) may be disposed on the third lateral side 213c of the first side frame 213 of the first housing 210. In an embodiment, the key input device 206 may be disposed on at least one of the other lateral sides (213a and 213b) of the first housing 210 and/or the lateral sides (223a, 223b, and 223c) of the second housing 220. In an embodiment, the electronic device 200 may not include some or all of the key input devices 206, and the key input devices 206 not included may be implemented in other forms, such as a soft key, on the flexible display 300. In an embodiment, the key input device 206 may be implemented using a pressure sensor included in the flexible display 300.

According to an embodiment, some of the camera devices (e.g., the first camera device 205 and/or the second camera device 208) or the sensor module 204 may be disposed to be exposed through the flexible display 300. For example, the first camera device 205 or the sensor module 204 may be disposed to contact an external environment through an opening (e.g., a through hole) at least partially formed in the flexible display 300 in the internal space of the electronic device 200. According to an embodiment, some sensor modules 204 may be disposed to perform their functions without being visually exposed through the flexible display 300 in the internal space of the electronic device 200. For example, in this case, the area of the flexible display 300 facing the sensor module may not need an opening.

Referring to FIG. 3B, the electronic device 200 may be operated to maintain an intermediate state through the hinge module 240. In this case, the electronic device 200 may control the flexible display 300 to display different contents in the display area corresponding to the first side 211 and the display area corresponding to the third side 221. According to an embodiment, the electronic device 200 may operate in a substantially unfolding state (e.g., the unfolding state of FIG. 2A) and/or a substantially folding state (e.g., the folding state of FIG. 3A) based on a predetermined inflection angle (e.g., the angle between the first housing 210 and the second housing 220 in the intermediate state) through the hinge module 240. For example, if a pressing force (e.g., pressure) is provided in the unfolding direction (direction B) in the unfolding state at a predetermined inflection angle through the hinge module 240, the electronic device 200 may be operated to transition to the unfolding state (e.g., the unfolding state of FIG. 2A). For example, the electronic device 200 may be operated through the hinge module 240 to transition to a closed state (e.g., the folding state of FIG. 3A) if a pressing force (e.g., pressure) is provided in a folding direction (direction C) in a state in which the electronic device 200 is unfolded at a predetermined inflection angle. In an embodiment, the electronic device 200 may be operated to maintain the unfolding state at various angles through the hinge module 240.

Referring to FIG. 4, the electronic device 200 may include a first side frame 213, a second side frame 223, and a hinge module 240 rotatably connecting the first side frame 213 and the second side frame 223. According to an embodiment, the electronic device 200 may include a first support plate 2131 at least partially extending from the first side frame 213 and a second support plate 2231 at least partially extending from the second side frame 223. According to an embodiment, the first support plate 2131 may be integrally formed with the first side frame 213 or may be structurally coupled with the first side frame 213. Similarly, the second support plate 2231 may be integrally formed with the second side frame 223 or may be structurally coupled with the second side frame 223.

According to an embodiment, the electronic device 200 may include the flexible display 300 disposed to be supported by the first support plate 2131 and the second support plate 2231. According to an embodiment, the electronic device 200 may include a first rear cover 214 coupled to the first side frame 213 and providing a first space between the first rear cover 214 and the first support plate 2131, and a second rear cover 224 coupled to the second side frame 223 and providing a second space between the second rear cover 224 and the second support plate 2231. In an embodiment, the first side frame 213 and the first rear cover 214 may be integrally formed. In an embodiment, the second side frame 223 and the second rear cover 224 may be integrally formed. According to an embodiment, the electronic device 200 may include a first housing 210 (e.g., a first housing structure) provided through the first side frame 213, the first support plate 2131, and the first rear cover 214. According to an embodiment, the electronic device 200 may include a second housing 220 (e.g., a second housing structure) provided through the second side frame 223, the second support plate 2231, and the second rear cover 224. According to an embodiment, the electronic device 200 may include a sub display 231 disposed to be visible from the outside through at least a partial area of the first rear cover 214.

According to an embodiment, the electronic device 200 may include a first board assembly 261 (e.g., a main printed circuit board), a camera assembly 263, a first battery 271, or a first bracket 251 disposed in a first space between the first side frame 213 and the first rear cover 214.

According to an embodiment, the camera assembly 263 may include a plurality of camera devices (e.g., the camera devices (e.g., the first camera device 205 and/or the second camera device 208) of FIGS. 2A and 3A) and may be electrically connected to the first board assembly 261.

According to an embodiment, the first bracket 251 may provide a support structure and enhanced rigidity for supporting the first substrate assembly 261 and/or the camera assembly 263.

According to an embodiment, the electronic device 200 may include a second board assembly 262 (e.g., a sub-printed circuit board), an antenna 290 (e.g., a coil member), a second battery 272, and a second bracket 252 disposed in a second space between the second side frame 223 and the second rear cover 224.

According to an embodiment, the electronic device 200 may include a wiring member 280 (e.g., a flexible printed circuit board). The wiring member 280, according to an embodiment, may be disposed to extend from the first substrate assembly 261 across the hinge module 240 to a plurality of electronic components (e.g., the second substrate assembly 262, the second battery 272, or the antenna 290) disposed between the second side frame 223 and the second rear cover 224.

According to an embodiment, the first substrate assembly 261, the second substrate assembly 262, and the wiring member 280 may be electrically connected, operatively connected, or integrally formed with each other. According to an embodiment, as the first substrate assembly 261 and the second substrate assembly 262 are integrally formed to transmit and receive an electrical signal or wavelength, the wiring member 280 may be omitted.

According to an embodiment, the electronic device 200 may include one or more batteries (e.g., the first battery 271 and/or the second battery 272). For example, one or more batteries may include at least one of a first battery 271 disposed in an area corresponding to the first housing 210 and a second battery 272 disposed in an area corresponding to the second housing 220. The electronic device 200, according to an embodiment, may include any one of the first battery 271 and/or the second battery 272 or may include both the first battery 271 and/or the second battery 272.

According to an embodiment, the electronic device 200 may include a flexible battery. The flexible battery may be disposed over at least a portion of each of the first housing 210 and the second housing 220. The flexible battery may be disposed to overlap a portion of an area corresponding to the first housing 210 and a portion of an area corresponding to the second housing 220. The flexible battery may include a battery hinge portion at a boundary at which the first housing 210 and the second housing 220 are separated from each other. The battery hinge portion may be formed to be physically thin. The battery hinge portion is provided at a position corresponding to the folding axis (e.g., axis F), so that the flexible battery may be folded as the electronic device 200 is folded.

According to an embodiment, the battery hinge portion of the flexible battery may be a physical or electrical connector. The flexible battery may include a first battery section, a second battery section, and a connector electrically or operatively connecting the first battery section and the second battery section. The first battery section and the second battery section may be electrically or operatively connected to each other through a connector. The connector may be a component constituting the flexible battery and may be provided outside or inside the flexible battery. However, according to an embodiment, the connector may physically connect the first battery section and the second battery section as a non-conductive line connector.

According to an embodiment, the antenna 290 may include a near field communication (NFC) antenna, a wireless charging antenna, and/or a magnetic secure transmission (MST) antenna. The antenna 290 may perform short-range communication with, e.g., an external device, or may wirelessly transmit or receive power necessary for charging.

According to an embodiment, the electronic device 200 may include a hinge housing 241 (e.g., a hinge cover) that supports the hinge module 240, is exposed to the outside when the electronic device 200 is in a folding state (e.g., the folding state of FIG. 3A), and is drawn in a first space and/or a second space, not to be visible from the outside, when the electronic device 200 is in an unfolding state (e.g., the unfolding state of FIG. 2A).

According to an embodiment, the electronic device 200 may include a first protective cover 215 coupled along an edge of the first side frame 213. According to an embodiment, the electronic device 200 may include a second protective cover 225 coupled along an edge of the second side frame 223. According to an embodiment, an edge of the first flat portion (e.g., the first flat portion 230a of FIG. 2B) of the flexible display 300 may be protected by the first protective cover 215. According to an embodiment, an edge of the second flat portion (e.g., the second flat portion 230b of FIG. 2B) of the flexible display 300 may be protected by the second protective cover 225.

According to an embodiment, the electronic device 200 may include a protective cap 235 disposed to protect an edge of a bendable portion (e.g., the bendable portion 230c of FIG. 2B) corresponding to the hinge module 240 of the flexible display 300.

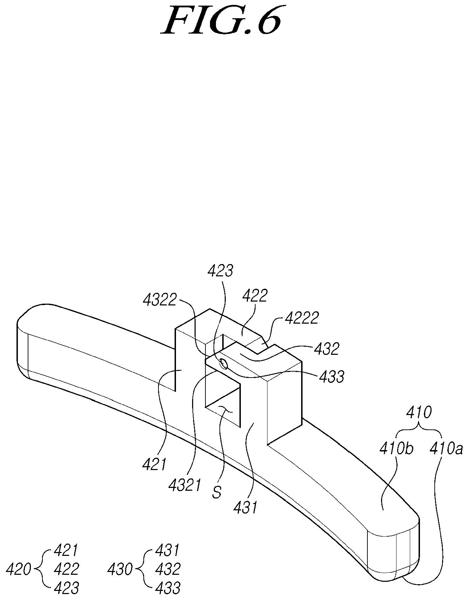

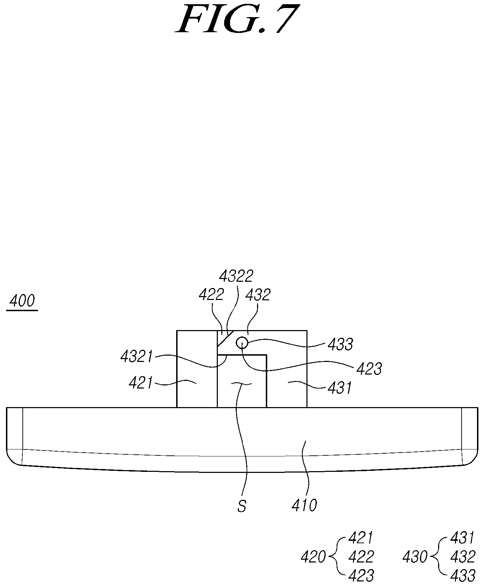

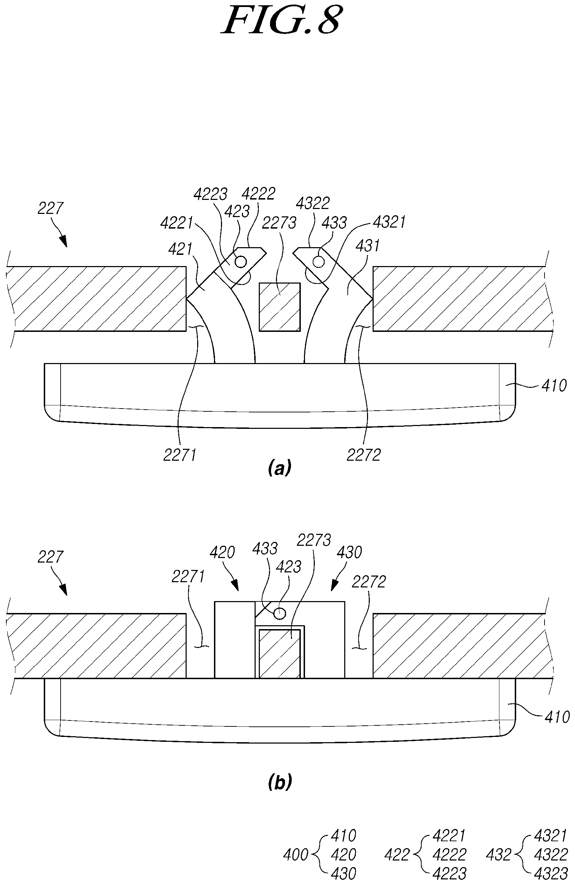

FIG. 5 is a perspective view illustrating a coupled state of a protective cover and a buffer member according to an embodiment. FIG. 6 is a perspective view illustrating a buffer member according to an embodiment. FIG. 7 is a front view illustrating a buffer member according to an embodiment. FIG. 8 is a view illustrating a process of coupling a protective cover and a buffer member according to an embodiment.

Referring to FIGS. 5 to 7, the damper accommodating portion 227 (e.g., the second damper accommodating portion 227 of FIG. 2B), according to an embodiment, may be recessed from one side (e.g., the side facing in the z-axis direction of FIG. 2B) of the protective cover 225 to accommodate the buffer member 400.

In an embodiment, the damper accommodating portion 227 may have a shape corresponding to a cushion part 410 of the buffer member 400.

In an embodiment, the damper accommodating portion 227 may include at least one pair of through holes (2271 and 2272) and a fixing portion 2273 provided between the pair of through holes (2271 and 2272). In an embodiment, the pair of holes (2271 and 2272) may include a first through hole 2271 disposed on one side of the fixing portion 2273 and a second through hole 2272 disposed on the other side opposite to the one side of the fixing portion 2273.

For convenience of description, the damper accommodating portion has been described with reference to the second damper accommodating portion 227 illustrated in FIG. 5, but since the first damper accommodating portion (e.g., the first damper accommodating portion 217 of FIG. 2B) and the second damper accommodating portion 227 have substantially the same shape, structure, and/or function, the description of the second damper accommodating portion 227 may be equally applied to the first damper accommodating portion 217. For example, the first damper accommodating portion 217 may include at least one pair of through holes (not shown) to be described below and a fixing portion provided between the pair of through holes.

According to an embodiment, the buffer member 400 may include a cushion part 410 and at least a pair of hooking parts (420 and 430).

According to an embodiment, the cushion part 410 may contact a protective cover (e.g., the first protective cover 215 or the second protective cover 225 of FIG. 2B) that the cushion part 410 faces in the folding state of the electronic device (e.g., the electronic device 200 of FIG. 2) or may contact the buffer member 400 disposed in the protective cover (215 or 225). In an embodiment, the cushion part 410 may have a shape corresponding to the damper accommodating portions (217 and 227).

In an embodiment, the cushion part 410 may include an exposed side 410a exposed to the outside if the damper accommodating portions (217 and 227) are seated, and a seating side 410b facing the exposed side 410a and contacting the damper accommodating portions (217 and 227). The exposed side 410a may be formed of a curved side, but the disclosure is not limited thereto.

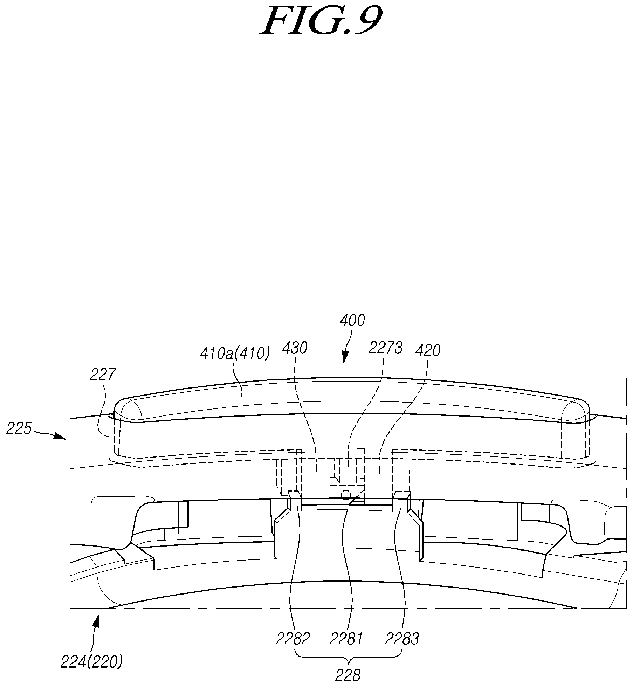

In an embodiment, the cushion part 410 may be provided to have a height higher than a depth of the damper accommodating portions (217 and 227) so that at least a portion of the cushion part 410 protrudes to the outside if the damper accommodating portions (217 and 227) are seated (see FIG. 9).

According to an embodiment, the pair of hooking parts (420 and 430) may be inserted into respective holes (2271 and 2272) of the damper accommodating portion 227 corresponding to the respective hooking parts 420 and 430 if the buffer member 400 and the protective cover 225 are coupled to each other to surround the fixing portion 2273. For example, the pair of hooking parts (420 and 430) may be hooked (or connected) to the fixing portion 2273.

According to an embodiment, the pair of hooking parts (420 and 430) may include a first hooking part 420 and a second hooking part 430 disposed to cross each other. In an embodiment, the first hooking part 420 may be inserted into the first through hole 2271 and then may be hooked to the fixing portion 2273. In an embodiment, the second hooking part 430 may be inserted into the second through hole 2272 and then hooked to the fixing portion 2273.

According to an embodiment, the first hooking part 420 may include a first pole 421 protruding from the seating side 410b of the cushion part 410 and a first locking protrusion 422 extending from the first pole 421 toward the second hooking part 430.

According to an embodiment, the first pole 421 may be configured to be elastically deformed (e.g., change shape or form) when inserted into the first through hole 2271 of the first hooking part 420.

According to an embodiment, the first locking protrusion 422 may include a first locking side 4221 and a first guide side 4222 inclined with respect to the first locking side 4221. The first locking side 4221 may mean one side of the first locking protrusion 422 that contacts or faces the fixing portion 2273 if the buffer member 400 and the protective covers (215 and 225) are coupled to each other.

In an embodiment, the first guide side 4222 may guide the elastic deformation of the first pole 421 by allowing the first locking protrusion 422 to slide while contacting the fixing portion 2273 on the first guide side 4222 when inserted into the first through hole 2271 of the first hooking part 420.

According to an embodiment, the first hooking part 420 may include a fastening protrusion 423 protruding from one side 4223 of the first locking protrusion 422 facing the second locking protrusion 432 to be described below. In an embodiment, the fastening protrusion 423 may have a cylindrical shape, but the disclosure is not limited thereto. In an embodiment, the fastening protrusion 423 may be integrally formed with the first locking protrusion 422 and may be formed of the same material as the first locking protrusion 422. For example, the fastening protrusion 423 may be formed of an elastic material. In an embodiment, if the protective covers (215 and 225) and the buffer member 400 are coupled to each other, the fastening protrusion 423 may be fitted into the fastening hole 433 of the second hooking part 430 to be described below.

According to an embodiment, the second hooking part 430 may include a second pole 431 protruding from the seating side 410b of the cushion part 410 and a second locking protrusion 432 extending from the second pole 431 toward the first hooking part 420.

According to an embodiment, the second pole 431 may be configured to be elastically deformed (e.g., change shape or form) when inserted into the second through hole 2272 of the second hooking part 430. In an embodiment, the second pole 431 may be spaced apart from the first pole 421 by a predetermined distance. In this case, a space s in which the fixing portion 2273 is accommodated if the buffer member 400 and the protective covers (215 and 225) are coupled may be formed between the first pole 421 and the second pole 431.

According to an embodiment, the first locking protrusion 422 and the second locking protrusion 432 may be disposed to cross each other. For example, the first locking protrusion 422 and the second locking protrusion 432 may be sequentially disposed along the width direction of the buffer member 400. For example, at least a portion of the first locking protrusion 422 and the second locking protrusion 432 may overlap each other while facing each other. In this case, the sum of the widths of the first locking protrusion 422 and the second locking protrusion 432 may be substantially the same as the width of the buffer member 400 (specifically, the cushion part 410).

According to an embodiment, the second locking protrusion 432 may include a second locking side 4321 and a second guide side 4322 inclined with respect to the second locking side 4321. The second locking side 4321 may mean (or refer to) one side (or surface) of the second locking protrusion 432 that contacts or faces the fixing portion 2273 if the buffer member 400 and the protective covers 215 and 225 are coupled.

In an embodiment, the second guide side 4322 may guide the elastic deformation of the second pole 431 by allowing the second locking protrusion 432 to slide while contacting the fixing portion 2273 on the second guide side 4322 when inserted into the second through hole 2272 of the second hooking part 430.

In the disclosure, guide sides (4222 and 4322) provided in the form of inclined sides are described as examples, but the disclosure is not limited thereto, and the guide sides (4222 and 4322) may be configured as curved sides.

According to an embodiment, the second hooking part 430 may include a fastening hole 433 that passes through the second locking protrusion 432 and into which the fastening protrusion 423 of the first hooking part 420 is inserted. In an embodiment, the fastening hole 433 may have a shape corresponding to the fastening protrusion 423.

Specifically, (a) of FIG. 8 is a view illustrating a process in which the buffer member 400 is coupled to the protective cover 225 (specifically, the damper accommodating portion 227), and (b) of FIG. 8 is a view illustrating a state in which the buffer member 400 is coupled to the protective cover 225.

Referring to FIG. 8, when the hooking parts (420 and 430) of each of the buffer members 400 are inserted into the holes (2271 and 2272) of the corresponding damper accommodating portion 227, the locking protrusions (422 and 432) of the hooking parts (420 and 430) come into contact with the fixing portion 2273 provided between the pair of holes (2271 and 2272) on the guide sides (4222 and 4322). In this state, when the hooking parts (420 and 430) are continuously inserted, the locking protrusions (422 and 432) of the hooking parts (420 and 430) slide on the guide sides (4222 and 4322), and the poles (421 and 431) of the hooking parts (420 and 430) are elastically deformed (e.g., change shape or form) in a direction away from the fixing portion 2273 (see (a) of FIG. 8).

When the hooking parts (420 and 430) are completely inserted, the deformed (e.g., shape-shifted) poles (421 and 431) are restored by an elastic force. In this case, the respective locking protrusions (422 and 432) of the hooking parts (420 and 430), specifically, the locking sides (4221 and 4321) of the locking protrusions (422 and 432), may face or contact the fixing portion 2273, and the hooking parts (420 and 430) may be hooked to the fixing portion 2273 in a shape surrounding the fixing portion 2273.

Thereafter, the coupling between the buffer member 400 and the protective covers 215 and 225 is completed by fitting and coupling the fastening protrusions 423 provided in the locking protrusions (422 and 432) to the fastening holes 433.

As such, as the pair of hooking parts (420 and 430) are disposed to cross each other and hooked to the fixing portion 2273 in the form of surrounding the fixing portion 2273 while the fastening protrusions are fitted and coupled into the fastening holes 433, the buffer member 400 may enhance the coupling force to the protective covers (215 and 225).

For example, if an external force is applied to the buffer member 400, frictional force corresponding to the external force is generated over the area where the hooking parts (420 and 430) contact the fixing portion 2273 as the pair of hooking parts (420 and 430) of the buffer member 400 are hooked and coupled to the fixing portion 2273 and the area where the fastening protrusion 423 and the fastening hole contact each other as the fastening protrusion 423 is fitted into the fastening hole 433, enhancing the coupling force of the buffer member 400 for the protective covers (215 and 225).

Accordingly, the buffer member 400 may be prevented from being separated from the protective covers (215 and 225) by an external force (or a vertical force) applied in a direction parallel to the through holes (2271 and 2272) (or a vertical direction of the buffer member 400) or an external force (or a shear force) applied in a length direction (or a horizontal direction) of the buffer member 400.

FIG. 9 is a perspective view illustrating a coupled state of a buffer member, a protective cover, and a housing according to an embodiment.

Referring to FIG. 9, a housing (e.g., the first housing 210 or the second housing 220 of FIG. 2) according to an embodiment may include a support portion 228 that supports a coupled state of the buffer member 400.

According to an embodiment, the support portion 228 may be provided at a corner portion of the bottom side (e.g., surface) of the rear cover (e.g., the first rear cover 214 or the second rear cover 224 of FIG. 2). The corner portion may refer to an area facing the corner portion (e.g., the corner portions (215a and 215b) and/or (225a and 225b) of FIG. 2B) of the protective covers 215 and 225 if the protective cover (e.g., the first protective cover 215 or the second protective cover 225 of FIG. 2) and the rear covers (214 and 224) are coupled to each other.

According to an embodiment, the support portion 228 may protrude from the bottom sides of the rear covers (214 and 224). For example, the support portion 228 may protrude to contact or face the buffer member 400 if the protective covers (215 and 225) and the rear covers (214 and 224) are coupled to each other.

According to an embodiment, the support portion 228 may include a recess portion 2281 contacting or facing the pair of hooking parts (420 and 430) of the buffer member 400, and a pair of support protrusions (2282 and 2283) protruding from each of two opposite side portions of the recess portion 2281.

According to an embodiment, the recess portion 2281 of the support portion 228 and the pair of support protrusions (2282 and 2283) may be provided to surround (e.g., encompass) at least a portion of the hooking parts (420 and 430) of the buffer member 400 if the protective covers (215 and 225) and the rear covers (214 and 224) are coupled. For example, the hooking parts (420 and 430) of the buffer member 400 may be seated in the recess portion 2281 if the protective covers (215 and 225) and the rear covers (214 and 224) are coupled to each other and may be positioned between the pair of support protrusions (2282 and 2283).

In this case, if an external force (e.g., a shear force) acts in the length direction (or the horizontal direction) of the buffer member 400, the pair of support protrusions (2282 and 2283) may function as horizontal stoppers for the hooking parts (420 and 430) of the buffer member 400, thereby preventing the buffer member 400 from being separated from the protective covers (215 and 225). For example, if a shear force is applied to the buffer member 400, the hooking parts (420 and 430) of the buffer member 400, specifically the poles (421 and 431), may contact the pair of support protrusions (2282 and 2283), thereby preventing the hooking parts (420 and 430) from moving in the horizontal direction.

Further, if an external force (e.g., a vertical force) acting in the height direction (or the vertical direction) of the buffer member 400 acts, the recess portion 2281 may function as a vertical stopper for the hooking parts (420 and 430) of the buffer member 400, thereby preventing the buffer member 400 from being separated from the protective covers (215 and 225). For example, if a vertical force is applied to the buffer member 400, the hooking parts (420 and 430) of the buffer member 400 may contact the fixing portion 2273 and/or the recess portion 2281, thereby preventing the hooking parts (420 and 430) from moving in the vertical direction.

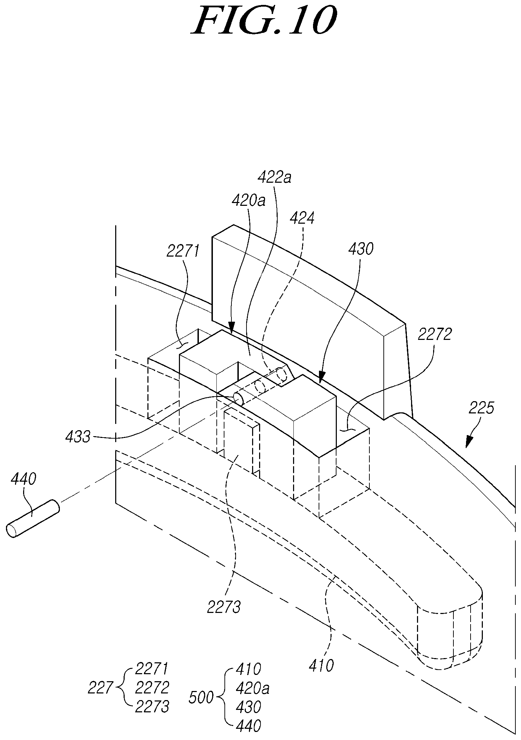

FIG. 10 is a perspective view illustrating a process of fastening between locking protrusions according to an embodiment.

Unlike the buffer member 400 illustrated in FIGS. 5 to 7, the buffer member 500 according to the embodiment illustrated in FIG. 10 may have a separate fastening structure rather than an integrated fastening structure.

Referring to FIG. 10, the buffer member 500 according to an embodiment may include a cushion part 410, a pair of hooking parts (420a and 430), and a fastening pole 440.

According to an embodiment, the pair of hooking parts (420a and 430) may include a first hooking part 420a provided with a fastening hole 424 and a second hooking part 430 provided with a fastening hole 433. Hereinafter, for convenience of description, the fastening hole 424 provided in the first hooking part 420a is referred to as a first fastening hole 424, and the fastening hole 433 provided in the second hooking part 430 is referred to as a second fastening hole 433.

According to an embodiment, the first fastening hole 424 may pass through the first locking protrusion 422a of the first hooking part 420a and may be formed at a position where the second fastening hole 433 faces the first fastening hole 424. In an embodiment, the first fastening hole 424 and the second fastening hole 433 may communicate with each other.

According to an embodiment, the fastening pole 440 may be sequentially fitted and coupled to the second fastening hole 433 and the first fastening hole 424. In an embodiment, the fastening pole 440 may have a cylindrical shape. In an embodiment, the fastening pole 440 may be formed of a material different from that of the hooking parts (420a and 430). For example, the fastening pole 440 may be formed of a metal material having high rigidity. In this case, the torsional resistance of the buffer member 500 may be enhanced compared to the case in which the fastening protrusion 423 illustrated in FIGS. 5 to 7 is formed of an elastic material.

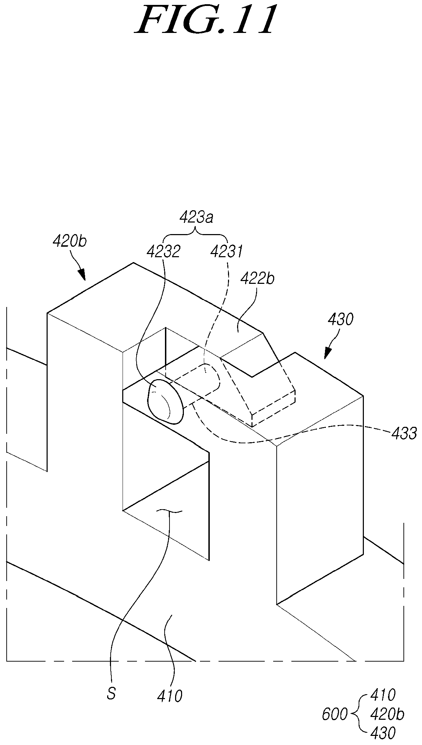

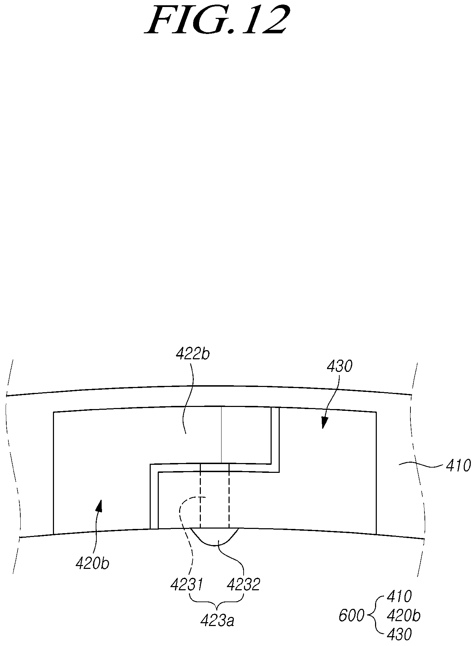

FIG. 11 is a perspective view illustrating a fastened state of hooking parts according to an embodiment. FIG. 12 is a plan view illustrating a buffer member according to an embodiment.

Referring to FIGS. 11 and 12, the buffer member 600, according to an embodiment, may include a cushion part 410, a first hooking part 420b, and a second hooking part 430.

According to an embodiment, the first hooking part 420b may include a fastening protrusion 423a fitted and coupled to the fastening hole 433 of the second hooking part 430. In an embodiment, the fastening protrusion 423a may protrude from one side (e.g., the one side 4223 of FIG. 5) of the first locking protrusion 422b facing the second locking protrusion 432.

According to an embodiment, the fastening protrusion 423a may include a body portion 4231 and a separation preventing portion 4232 provided at a free end of the body portion 4231. In an embodiment, the body portion 4231 may have a cylindrical shape. In an embodiment, the separation preventing portion 4232 may have a tapered shape, having a diameter which increases gradually from the free end of the fastening protrusion 423a toward the fixed end. For example, the diameter of the separation preventing portion 4232 may gradually increase toward the body portion 4231, and the maximum diameter may be larger than the diameter of the fastening hole 433.

In this case, if the fastening protrusion 423a is coupled to the hooking parts 420b and 430 through the fastening hole 433, the separation preventing portion 4232 of the fastening protrusion 423a is elastically deformed, passes through the fastening hole 433, is exposed to the outside of the fastening hole 433, and is then restored to contact the outer side of the second locking protrusion 432, thereby preventing the separation of the fastening protrusion 423a from the fastening hole 433. As a result, the coupling force between the hooking parts (420b and 430) may be enhanced.

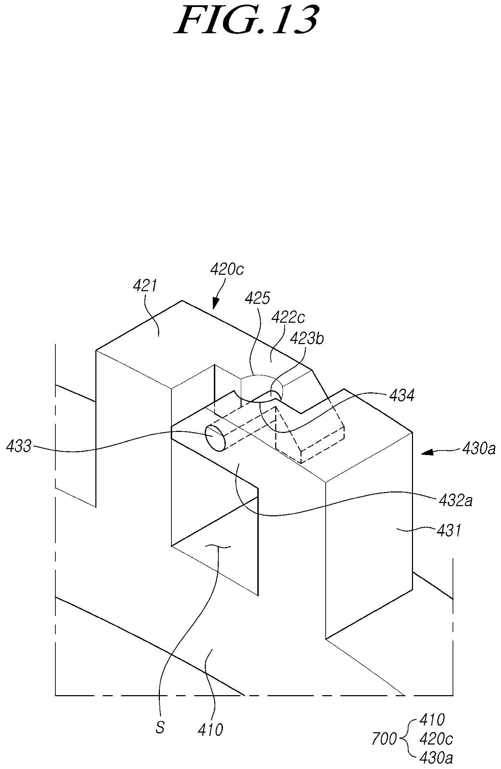

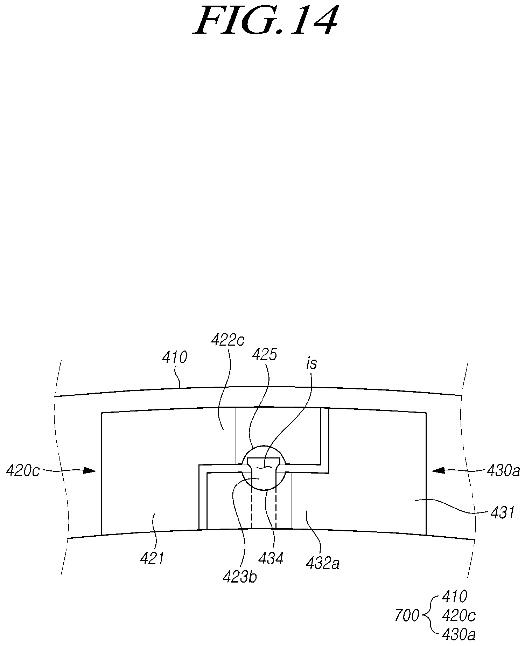

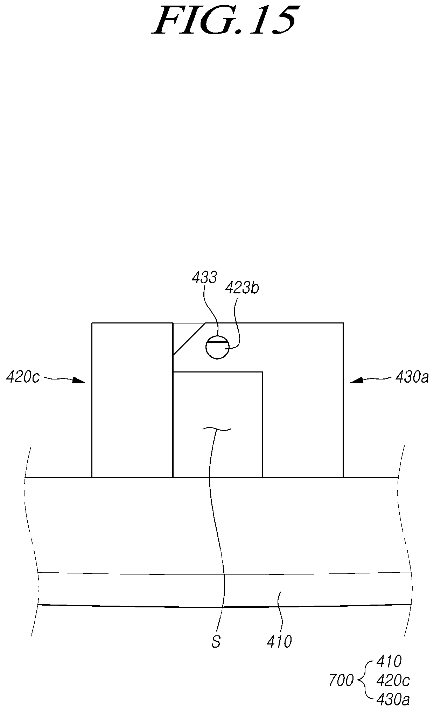

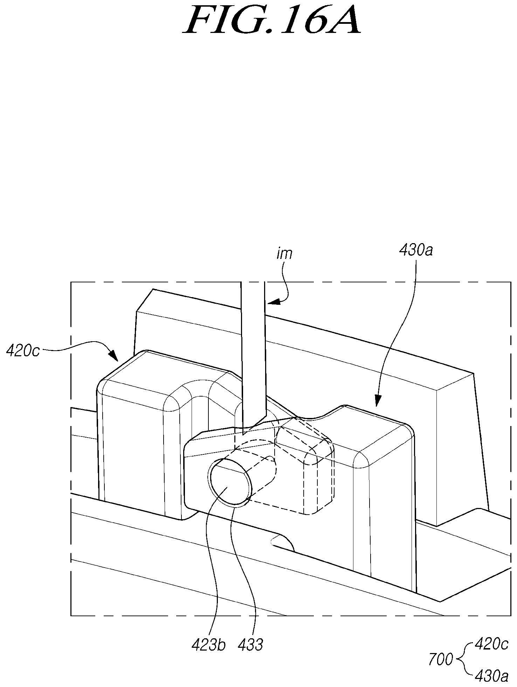

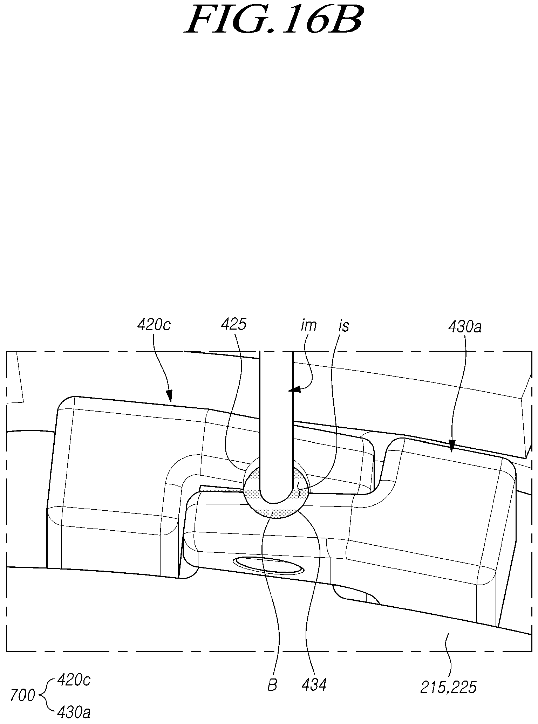

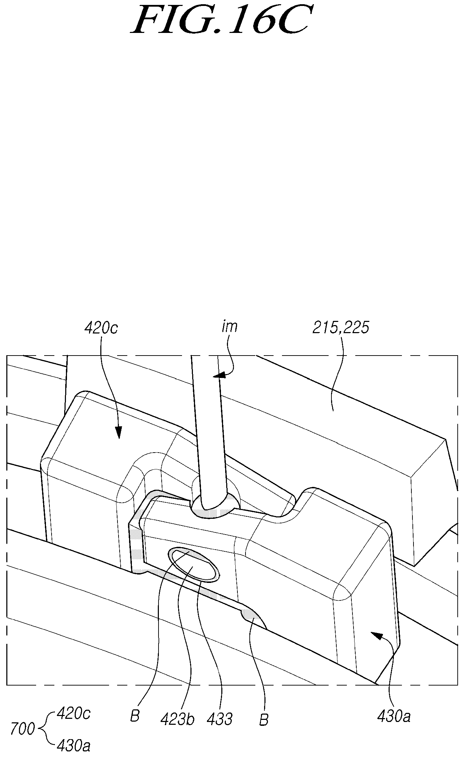

FIG. 13 is a perspective view illustrating a portion of a buffer member according to an embodiment. FIG. 14 is a plan view illustrating a portion of a buffer member according to an embodiment. FIG. 15 is a front view illustrating a portion of a buffer member according to an embodiment. FIGS. 16A, 16B, and 16C are views illustrating a moving path of a bonding member according to an embodiment.

According to an embodiment, the electronic device (e.g., the electronic device 200 of FIGS. 2 to 4) may include a bonding member (e.g., the bonding member B of FIG. 16) applied to a gap between the protective covers 215 and 225 and the buffer member 700 to enhance a coupling force between the protective cover (e.g., the first protective cover 215 or the second protective cover 225 of FIG. 2) and the buffer member 700.

Hereinafter, a bonding path structure in which the bonding member B moves is described with reference to FIGS. 13 to 16.

Referring to FIGS. 13 to 16, the buffer member 700 according to an embodiment may include a cushion part 410, a first hooking part 420c, and a second hooking part 430a.

According to an embodiment, the first hooking part 420c may include a first bonding hole 425 recessed from one side of the first locking protrusion 422c including the first guide side 4222. In an embodiment, the first bonding hole 425 may be recessed and connected to a fastening protrusion 423b to be described below.

In an embodiment, the first bonding hole 425 may be provided at a position adjacent to the fastening hole 433 of the second hooking part 430a. For example, the first bonding hole 425 may be disposed in one side 4223 of the first locking protrusion 422c facing the second locking protrusion 432a.

In an embodiment, the first bonding hole 425 may have a structure that is open in a direction facing the second locking protrusion 432a. For example, the first bonding hole 425 may have a semicircular shape as illustrated in FIG. 14.

According to an embodiment, the first hooking part 420c may include a fastening protrusion 423b protruding from one side 4223 of the first locking protrusion 422c. In an embodiment, the fastening protrusion 423b may protrude from the inner side of the first bonding hole 425. In an embodiment, the fastening protrusion 423b may have a size smaller than the size of the fastening hole 433. In this case, the fastening protrusion 423b does not occupy the entire inner space of the fastening hole 433 when inserted into the fastening hole 433. For example, the fastening protrusion 423b may have a semi-cylindrical shape, but the disclosure is not limited thereto.

According to an embodiment, the second hooking part 430a may include a second bonding hole 434 recessed from one side of the second locking protrusion 432a including the second guide side 4322.

In an embodiment, the second bonding hole 434 may be recessed and connected to the fastening hole 433.

In an embodiment, the second bonding hole 434 may be disposed to at least partially face the first bonding hole 425. For example, the second bonding hole 434 may be disposed in one side (or surface) of the second locking protrusion 432a facing the first locking protrusion 422c.

In an embodiment, the second bonding hole 434 may have a structure that is open in a direction facing the first locking protrusion 422c. For example, the second bonding hole 434 may have a semicircular shape as illustrated in FIG. 14.

According to an embodiment, as illustrated in FIG. 14, the first bonding hole 425 and the second bonding hole 434 may form an injection space (is), into which a bonding injection device (im), to be described below, is inserted, and the injection space (is) may have an overall circular shape.

In this case, the bonding member (B) may be injected into the bonding holes (425 and 434), e.g., the injection space (is), through the needle-shaped bonding injection device (im), and may flow into the inside of the fastening hole 433 and a gap between the first hooking part 420c, the second hooking part 430a, and the protective covers (215 and 225) along the bonding holes (425 and 434). Accordingly, the bonding member (B) may be applied to and/or fill the fastening hole 433 through the bonding holes (425 and 434), thereby enhancing the coupling force between the fastening hole 433 and the fastening protrusion 423b. Further, the bonding member (B) may be applied to and/or fill a gap between the first hooking part 420c, the second hooking part 430a, and the protective covers (215 and 225) through the bonding holes (425 and 434), thereby enhancing the coupling force between the hooking parts (420c and 430a) and the protective covers (215 and 225).

Referring to FIGs. 16A to 16C, the operator may insert the bonding injection device (im) into a circular injection space is formed between the bonding hole 425 of the first hooking part 420c and the bonding hole 434 of the second hooking part 430a, and the operator may inject the bonding member (B) into the injection space is using the bonding injection device (im) (see FIGS. 16A and 16B). In this case, the bonding member (B), injected into the injection space (is), may be introduced into the fastening hole 433 of the second hooking part 430a through the bonding holes (425 and 434) of the hooking parts (420c and 430a), and as the bonding member (B) fills and cured in the gap between the fastening protrusion 423b and the fastening hole 433 inserted into the fastening hole 433, the coupling force between the fastening protrusion 423b and the fastening hole 433 may be enhanced (see FIG. 16C). Further, the bonding member (B) injected into the injection space (is) may be introduced into a gap between the first hooking part 420c and the second hooking part 430a. The bonding member (B) fills the gap between the first hooking part 420c and the second hooking part 430a and contacts the protective covers (215 and 225) and hardens, the coupling force between the hooking parts (420c and 430a) and the coupling force between the buffer member 700 and the protective covers (215 and 225) may be enhanced (or strengthened).

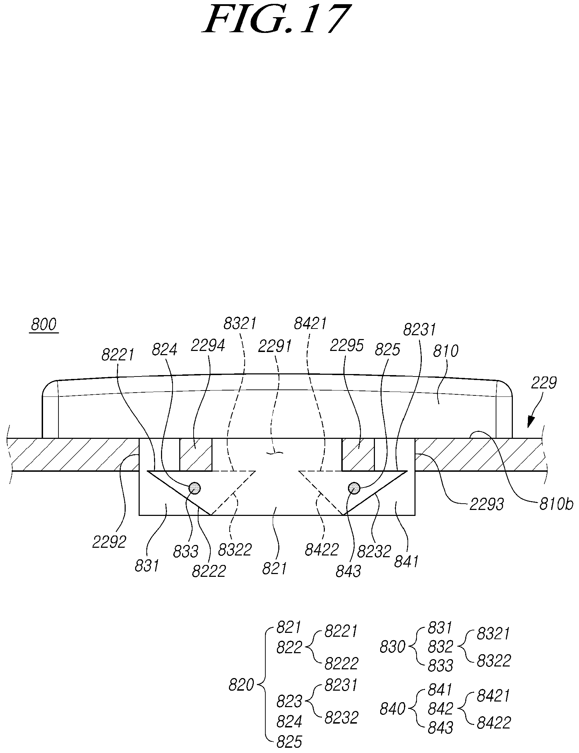

FIG. 17 is a front view illustrating a buffer member according to an embodiment.

Referring to FIG. 17, a damper accommodating portion 229 (e.g., the first damper accommodating portion 217 or the second damper accommodating portion 227 of FIG. 2B), according to an embodiment, may include a first through hole 2291, a second through hole 2292, a third through hole 2293, a first fixing portion 2294, and a second fixing portion 2295.

According to an embodiment, the first through hole 2291 may be provided between the second through hole 2292 and the third through hole 2293. In an embodiment, the first through hole 2291 may have a larger diameter than the second through hole 2292 and the third through hole 2293.

According to an embodiment, the first fixing portion 2294 may be disposed between the second through hole 2292 and the first through hole 2291. According to an embodiment, the second fixing portion 2295 may be disposed between the first through hole 2291 and the third through hole 2293.

According to an embodiment, the buffer member 800 (e.g., the buffer member 200 of FIG. 2B) may include a cushion part 810, a first hooking part 820, a second hooking part 830, and a third hooking part 840.

According to an embodiment, the cushion part 810 may contact a protective cover (e.g., the first protective cover 215 or the second protective cover 225 of FIG. 2B) that faces the cushion part 810 in the folding state of the electronic device (e.g., the electronic device 200 of FIG. 2) or may contact the buffer member 800 disposed in the protective cover (215 or 225). The cushion part 810 may be substantially the same in shape, structure, and/or shape as the cushion part 410 illustrated in FIGS. 5 to 7, and the description of the cushion part 410 described above with reference to FIGS. 5 to 7 may be equally applied.

In an embodiment, the first hooking part 820 and the second hooking part 830 may be disposed to cross each other. In an embodiment, the first hooking part 820 and the third hooking part 840 may be disposed to cross each other.

According to an embodiment, the hooking parts (820, 830, and 840) may be inserted into the holes (2291, 2292, and 2293) of the damper accommodating portions 229 corresponding to the hooking parts (820, 830, and 840) if the buffer member 800 and the protective cover 225 are coupled to each other to surround the first fixing portion 2294 and the second fixing portion 2295. For example, the hooking parts (820, 830, and 840) may be hooked to the fixing portions (2294 and 2295).

According to an embodiment, the first hooking part 820 may include a first pole 821 protruding from the seating side 810b of the cushion part 810, a 1-1th locking protrusion 822 extending from the first pole 821 toward the second hooking part 830, and a 1-2th locking protrusion 823 extending from the first pole 821 toward the third hooking part 840.

According to an embodiment, the first pole 821 may be configured to be elastically deformed (e.g., change in shape or form) when inserted into the first through hole 2291 of the first hooking part 820.

According to an embodiment, the 1-1th locking protrusion 822 may include a locking side 8221 and a guide side 8222 inclined with respect to the locking side 8221. The locking side 8221 may mean (or refer to) one side (e.g., surface) of the 1-1th locking protrusion 822 that contacts or faces the first fixing portion 2294 if the buffer member 800 and the protective covers (215 and 225) are coupled to each other. The guide side 8222 may guide elastic deformation of the 1-1th locking protrusion 822 and/or the first pole 821 by allowing the 1-1th locking protrusion 822 to slide in contact with the first fixing portion 2294 on the guide side 8222 when inserted into the first through hole 2291 of the first hooking part 820.

According to an embodiment, the 1-2th locking protrusion 823 may be symmetrical in shape and/or structure to the 1-1th locking protrusion 822 with respect to the first pole 821.

According to an embodiment, the 1-2th locking protrusion 823 may include a locking side 8231 and a guide side 8232 inclined with respect to the locking side 8231. The locking side 8231 may mean (or refer to) one side (e.g., surface) of the 1-2th locking protrusion 823 that contacts or faces the second fixing portion 2295 if the buffer member 800 and the protective covers (215 and 225) are coupled to each other. The guide side 8232 may guide elastic deformation of the 1-2th locking protrusion 823 and/or the first pole 821 by allowing the 1-2th locking protrusion 823 to slide in contact with the second fixing portion 2295 on the guide side 8232 when inserted into the first through hole 2291 of the first hooking part 820.

According to an embodiment, the first hooking part 820 may include a first fastening hole 824 that passes through the 1-1th locking protrusion 822 and into which the fastening protrusion 833 of the second hooking part 830, which is described below, is inserted, and a second fastening hole 825 that passes through the 1-2th locking protrusion 823 and into which the fastening protrusion 843 of the third hooking part 840, which is described below, is inserted. In an embodiment, the first fastening hole 824 may have a shape corresponding to the fastening protrusion 833 of the second hooking part 830. In an embodiment, the second fastening hole 825 may have a shape corresponding to the fastening protrusion 843 of the third hooking part 840.

According to an embodiment, the second hooking part 830 may include a second pole 831 protruding from the seating side 810b of the cushion part 810 and a second locking protrusion 832 extending from the second pole 831 toward the first hooking part 820.

According to an embodiment, the second pole 831 may be configured to be elastically deformed when inserted into the second through hole 2292 of the second hooking part 830. In an embodiment, the second pole 831 may be spaced apart from the first pole 821 by a predetermined distance to one side.

According to an embodiment, the second locking protrusion 832 and the 1-1th locking protrusion 822 may be disposed to cross each other. For example, the second locking protrusion 832 and the 1-1th locking protrusion 822 may be sequentially disposed along the width direction of the buffer member 800. For example, at least a portion of the second locking protrusion 832 and the 1-1th locking protrusion 822 may overlap each other while facing each other.

According to an embodiment, the second locking protrusion 832 may include a locking side 8321 and a guide side 8322 inclined with respect to the locking side 8321. The locking side 8321 may mean (or refer to) one side (e.g., surface) of the second locking protrusion 832 that contacts or faces the first fixing portion 2294 if the buffer member 800 and the protective covers (215 and 225) are coupled to each other. The second guide side 8322 may guide the elastic deformation (e.g., change in shape or form) of the second pole 831 by allowing the second locking protrusion 832 to slide while contacting the fixing portion 2294 on the guide side 8322 when inserted into the second through hole 2292 of the second hooking part 830.

According to an embodiment, the second hooking part 830 may include a fastening protrusion 833 protruding from one side (or surface) of the second locking protrusion 832 facing the 1-1th locking protrusion 822. In an embodiment, the fastening protrusion 833 may have a cylindrical shape, but the disclosure is not limited thereto. In an embodiment, the fastening protrusion 833 may be integrally formed with the second locking protrusion 832 and may be formed of the same material as the second locking protrusion 832. For example, the fastening protrusion 833 may be formed of an elastic material. In an embodiment, the fastening protrusion 833 may be fitted into the first fastening hole 824 of the first hooking part 820 if the protective covers (215 and 225) and the buffer member 800 are coupled to each other.

According to an embodiment, the third hooking part 840 may include a third pole 841 protruding from the seating side 810b of the cushion part 810 and a third locking protrusion 842 extending from the third pole 841 toward the first hooking part 820.

According to an embodiment, the third pole 841 may be configured to be elastically deformed when inserted into the third through hole 2293 of the third hooking part 840. In an embodiment, the third pole 841 may be spaced apart from the first pole 821 by a predetermined distance to one side.

According to an embodiment, the third locking protrusion 842 and the 1-2th locking protrusion 823 may be disposed to cross each other. For example, the third locking protrusion 842 and the 1-2th locking protrusion 823 may be sequentially disposed along the width direction of the buffer member 800. For example, at least a portion of the third locking protrusion 842 and the 1-2th locking protrusion 823 may overlap each other while facing each other.

According to an embodiment, the third locking protrusion 842 may include a locking side 8421 and a guide side 8422 inclined with respect to the locking side 8421. The locking side 8421 may mean (or refer to) one side (e.g., surface) of the third locking protrusion 842 that contacts or faces the second fixing portion 2295 if the buffer member 800 and the protective covers (215 and 225) are coupled to each other. The guide side 8422 may guide the elastic deformation of the third pole 841 by allowing the third locking protrusion 842 to slide while contacting the second fixing portion 2295 on the guide side 8422 when inserted into the third through hole 2293 of the third hooking part 840.

According to an embodiment, the third hooking part 840 may include a fastening protrusion 843 protruding from one side (or surface) of the third locking protrusion 842 facing the 1-2th locking protrusion 823. In an embodiment, the fastening protrusion 843 may have a cylindrical shape, but the disclosure is not limited thereto. In an embodiment, the fastening protrusion 843 may be integrally formed with the third locking protrusion 842 and may be formed of the same material as the third locking protrusion 842. For example, the fastening protrusion 843 may be formed of an elastic material. In an embodiment, the fastening protrusion 843 may be fitted and coupled to the second fastening hole 825 of the first hooking part 820 if the protective covers (215 and 225) and the buffer member 800 are coupled to each other.

In this case, the hooking parts (820, 830, and 840) surround each of the plurality of fixing portions (2294 and 2295), and as the fastening protrusions (833 and 843) are fitted and coupled to the fastening holes (824 and 825), the coupling force between the buffer member 800 and the protective covers (215 and 225) may be enhanced.

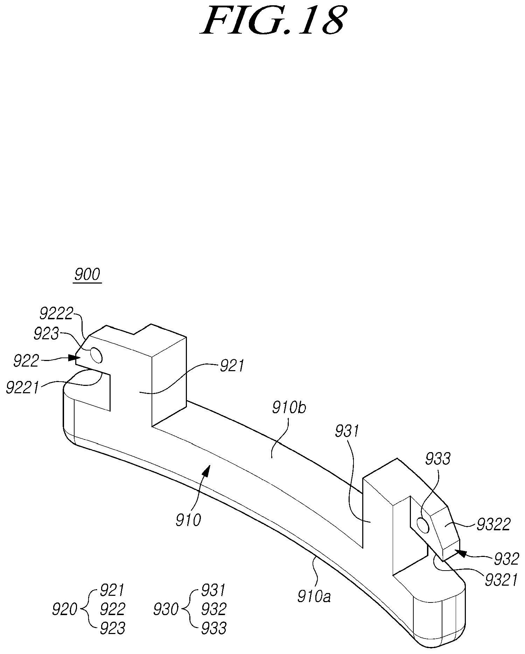

FIG. 18 is a perspective view illustrating a buffer member according to an embodiment.

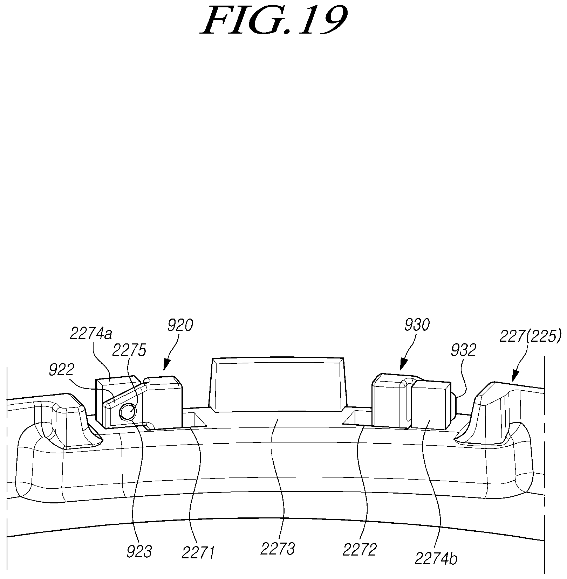

FIG. 19 is a perspective view illustrating a coupled state of a protective cover and a buffer member according to an embodiment.

Referring to FIGS. 18 and 19, a buffer member 900 according to an embodiment may include a cushion part 910, a first hooking part 920, and a second hooking part 930.

According to an embodiment, if the buffer member 900 is coupled to a protective cover (e.g., the first protective cover 215 or the second protective cover 225 of FIG. 2B), the cushion part 910 may contact the protective cover 215 or 225 that faces the buffer member 900 in the folding state the electronic device (e.g., the electronic device 200 of FIG. 2) or may contact the other facing buffer member 400 coupled to the protective cover (215 or 225). In an embodiment, the cushion part 910 may be fitted and coupled to the damper accommodating portion (e.g., the first damper accommodating portion 217 or the second damper accommodating portion 227 of FIG. 2B) of the protective covers (215 and 225) to be fixedly disposed on the protective covers (215 and 225). For example, the cushion part 910 may have a shape corresponding to the damper accommodating portions (217 and 227).

In an embodiment, the cushion part 910 may include an exposed side 910a exposed to the outside when seated in the damper accommodating portions (217 and 227), and a seating side 910b facing the exposed side 910a and contacting the damper accommodating portions 217 and 227. The exposed side 910a may be formed of a curved side (e.g., surface), but the disclosure is not limited thereto.

According to an embodiment, the first hooking part 920 and the second hooking part 930 may be spaced apart from each other on the seating side 910b of the cushion part 910.

According to an embodiment, the first hooking part 920 may include a first pole 921 protruding from the seating side 910b of the cushion part 910, a first locking protrusion 922 extending from the first pole 921 in a direction away from the second hooking part 930, and a first fastening hole 923 penetrating the first locking protrusion 922.

According to an embodiment, the first pole 921 may be configured to be elastically deformed when inserted into the first through hole 2271 of the damper receiving portion 227 of the first hooking part 920.

According to an embodiment, the first locking protrusion 922 may be configured to be elastically deformed when inserted into the first through hole 2271 of the damper receiving portion 227 of the first hooking part 920. According to an embodiment, the first locking protrusion 922 may include a first locking side 9221 and a first guide side 9222 inclined with respect to the first locking side 9221. The first locking side 9221 may mean one side (or surface) of the first locking protrusion 922 that contacts or faces the inner sides (or surfaces) of the protective covers 215 and 225 if the buffer member 900 and the protective covers 215 and 225 are coupled to each other.

According to an embodiment, the first fastening hole 923 may extend through the first locking protrusion 922 in a direction parallel to the width direction of the buffer member 900. In an embodiment, the fastening protrusion 2275 of the fastening rib 2274a, which is described below, may be fitted and coupled to the first fastening hole 923.

According to an embodiment, the second hooking part 930 may include a second pole 931 protruding from the seating side 910b of the cushion part 910, a second locking protrusion 932 extending from the second pole 931 in a direction away from the first hooking part 920, and a second fastening hole 933 penetrating the second locking protrusion 932.

According to an embodiment, the second pole 931 may be configured to be elastically deformed (e.g., changed in shape or form) when inserted into the second through hole 2272 of the damper receiving portion 227 of the second hooking part 930.

According to an embodiment, the second locking protrusion 932 may be configured to be elastically deformed when inserted into the second through hole 2272 of the damper receiving portion 227 of the second hooking part 930.

According to an embodiment, the second locking protrusion 932 may include a second locking side 9321 and a second guide side 9322 inclined with respect to the second locking side 9321. The first locking side 9321 may mean one side (or surface) of the second locking protrusion 932 that contacts or faces the inner sides (or surfaces) of the protective covers (215 and 225) if the buffer member 900 and the protective covers (215 and 225) are coupled to each other.

According to an embodiment, the second fastening hole 933 may extend through the second locking protrusion 932 in a direction parallel to the width direction of the buffer member 900. In an embodiment, a fastening protrusion (not shown) of a second fastening rib 2274b, which is described below, may be fitted and coupled to the second fastening hole 933.

According to an embodiment, the first locking protrusion 922 of the first hooking part 920 may be positioned in the front in the width direction of the buffer member 400. According to an embodiment, the second locking protrusion 932 of the second hooking part 930 may be positioned behind the buffer member 900 in the width direction. However, the disclosure is not limited thereto, and the locking protrusions (922 and 932) may be disposed at different positions on the front and rear sides, respectively, in the width direction of the buffer member 900.

According to an embodiment, if the buffer member 900 and the protective cover 225 are coupled, the first hooking part 920 and the second hooking part 930 may be inserted into the holes (2271 and 2272) of the damper accommodating portions 227 corresponding to the hooking parts (920 and 930), respectively, and may be hooked to the inner sides of the damper accommodating portions 227 (or the inner side of the protective cover 225).

Referring to FIG. 19, the damper accommodating portion 227, according to an embodiment, may include a first fastening rib 2274a and a second fastening rib 2274b protruding from an inner side of the damper accommodating portion 227 and spaced apart from each other. In an embodiment, the first fastening rib 2274a and the second fastening rib 2274b may be spaced apart from each other with the through holes (2271 and 2272) of the damper accommodating portion 227 and the fixing portion 2273 interposed therebetween.

According to an embodiment, each of the first fastening rib 2274a and the second fastening rib 2274b may include a fastening protrusion 2275 inserted into each of the fastening holes (923 and 933) of the hooking parts (920 and 930) if the buffer member 900 and the damper accommodating portion 227 are coupled to each other.

In an embodiment, the fastening protrusion 2275 of the first fastening rib 2274a may protrude from the first fastening rib 2274a to one side and may have a cylindrical shape. In an embodiment, the fastening protrusion (not shown) of the second fastening rib 2274b may protrude from the second fastening rib 2274b to the other side opposite to the one side and may have a cylindrical shape.

According to an embodiment, if the buffer member 900 and the protective cover 225 are coupled to each other, the first hooking part 920 and the second hooking part 930 may be fitted and coupled to the fastening protrusions 2275 of the fastening ribs (2274a and 2274b) facing the respective hooking parts (920 and 930) through the fastening holes (923 and 933). In this case, the coupling force between the buffer member 900 and the protective covers 215 and 225 may be enhanced.

A foldable electronic device may include a first housing (210), a second housing (220) rotatably connected to the first housing (210) by a hinge module (240), a protective cover (215, 225) coupled along edges of housings (210, 220) and including a pair of through holes (2271, 2272) and a fixing portion (2273) provided between the pair of through holes (2271, 2272), and a buffer member (400, 500, 600, 700) including a pair of hooking parts (420, 420a, 420b, 420c, 430, 430a) inserted into the pair of through holes (2271, 2272) and disposed to surround the fixing portion (2273), and the pair of hooking parts (420, 420a, 420b, 420c, 430, 430a) may include each locking protrusion (422, 422a, 422b, 422c, 432, 432a) disposed to cross each other such that at least a portion of the each locking protrusion is configured to overlap each other..

According to one embodiment, the buffer member (400, 500, 600, 700) may be disposed at corner portion (215a, 215b, 225a, 225b) of the protective cover (215, 225).

According to one embodiment, the buffer member (400, 500, 600, 700) may include a cushion part (410) exposed to an outside of the protective cover (215, 225), a first pole (421) protruding from one side (410b) of the cushion part (410) facing the protective cover (215, 225), and a second pole (431) protruding from the one side (410b) of the cushion part (410) and spaced apart from the first pole (421).

According to one embodiment, the locking protrusions (422, 422a, 422b, 422c, 432, 432a) may include a first locking protrusion (422, 422a, 422b, 422c) extending from the first pole (421) in a first direction perpendicular to the first pole (421) and a second locking protrusion (432, 432a) extending from the second pole (432) in a second direction perpendicular to the second pole (432) and opposite to the first direction.

According to one embodiment, the first locking protrusion (422, 422a, 422b, 422c) and the second locking protrusion (432, 432a) may be sequentially disposed along a third direction perpendicular to the first direction and the second directions.

According to one embodiment, each of the pair of hooking parts (420, 420a, 420b, 420c, 430, 430a) may include a locking side (4221, 4321) in contact with the fixing portion (2273) and a guide side (4222, 4322) connected to the locking side (4221, 4321) and inclined with respect to the locking side (4221, 4321).

According to one embodiment, one of the pair of hooking parts (420, 420a, 420b, 420c, 430, 430a) may include fastening protrusion (423, 423a) protruding from one side 4223 facing the other hooking part (420, 420a, 420b, 420c, 430, 430a), and the other one of the pair of fixing parts (420, 420a, 420b, 420c, 430, 430a) may include a fastening hole (433) into which the fastening protrusion (423, 423a) is inserted.

According to one embodiment, the fastening protrusions (423a) may include a separation preventing portion (4322) having a tapered shape and provided at a free end of the fastening protrusion (423a) and gradually increasing in diameter from the free end to a fixed end.

According to one embodiment, each of the pair of fixing parts (420a, 430) may include fastening holes (424, 433) communicating with each other, and the buffer member (500) may include fastening pole (440) inserted through the fastening holes (424, 433).

According to one embodiment, at least one of the pair of hooking parts (420c, 430a) may include bonding hole (425, 434) formed by recessing from guide side (4222, 4322) located on an opposite side of locking side (4221, 4321) in contact with the fixing portion (2273) and communicating with the fastening hole (433).

According to one embodiment, the buffer member (700) may include a bonding member (B) injected into the bonding holes (425, 434) through a needle-shaped injection device and applied and filled along the bonding hole (425, 434) and the fastening hole (433).

According to one embodiment, the fastening protrusion (423b) may have a size smaller than a diameter of the fastening hole (433).

According to one embodiment, each of the first housing (210) and the second housing (220) may include support part (228) protruding from a bottom side facing the protective cover (215, 225) and in which the buffer member (400, 500, 600, 700) is seated if the protective cover (215, 225) and the housing (210, 220) are coupled.

According to one embodiment, the support part (228) may include a recess portion (2281) and a pair of support part (2282, 2283) protruding from each side of the recess protrusion (2281).

According to one embodiment, the protective cover (215, 225) may include a first protective cover (215) disposed along an edge of the first housing (210) and a second protective cover (225) disposed along the edge of the second housing (220), and the buffer member (400, 500, 600, 700) may be disposed on at least one of the first protective cover (215) and the second protective cover (225), and contact another protective cover (215 or 225), or a buffer member (400, 500, 600, 700) disposed on the other protective cover (215 or 225) when the electronic device 200 is in a folding state.

An electronic device according to one embodiment of the disclosure may include a housing, a protective cover (215, 225) coupled along an edge of housing and including a pair of through holes (2271, 2272) and a fixing portion (2273) provided between the pair of through holes (2271, 2272), and a buffer member (400, 500, 600, 700) including a pair of hooking parts (420, 420a, 420b, 420c, 430, 430a) inserted into the pair of through holes (2271, 2272) and disposed to surround the fixing portion (2273), and the pair of hooking parts (420, 420a, 420b, 420c, 430, 430a) may be disposed to cross each other.

According to one embodiment, the buffer member (400, 500, 600, 700) may include a cushion part (410) exposed to an outside of the protective cover (215, 225), a first pole (421) protruding from one side (410b) of the cushion part (410) facing the protective cover (215, 225), and a second pole (431) protruding from the one side (410b) of the cushion part (410) and spaced apart from the first pole (421).

According to one embodiment, wherein the pair of hooking parts (420, 420a, 420b, 420c, 430, 430a) may include a first locking protrusion (422, 422a, 422b, 422c) extending from the first pole (421) in a first direction perpendicular to the first pole (421) and a second locking protrusion (432, 432a) extending from the second pole (432) in a second direction perpendicular to the second pole (432) and opposite to the first direction.

According to one embodiment, one of the pair of hooking parts (420, 420a, 420b, 420c, 430, 430a) may include fastening protrusion (423, 423a) protruding from one side 4223 facing the other hooking part (420, 420a, 420b, 420c, 430, 430a), and the other one of the pair of fixing parts (420, 420a, 420b, 420c, 430, 430a) may include a fastening hole (433) into which the fastening protrusion (423, 423a) is inserted.

An electronic device according to one embodiment of the disclosure may include a housing, a protective cover (229) coupled along an edge of housing and including first to third through holes (2291, 2292, 2293) spaced apart from each other, and first and second fixing portions (2294, 2295) provided between the through holes (2291, 2292, 2293), and a buffering member (800) including first to third hooking parts (820, 830, 840) inserted into each of the through holes (2291, 2292, 2293) and disposed to surround the first and second fixing portions (2294, 2295), and the first and second hooking parts (820, 830) may be disposed to be staggered so as to be caught by the first fixing portion (2294), and the first and third hooking parts (820, 840) may be disposed to be staggered so as to be caught by the second fixing portion (2295).

## Claims

1. A foldable electronic device including :
a first housing (210);
a second housing (220) rotatably connected to the first housing (210) by a hinge module (240);
a protective cover (215, 225) coupled along edges of the housings (210, 220) and including a pair of through holes (2271, 2272) and a fixing portion (2273) provided between the pair of through holes (2271, 2272); and
a buffer member (400, 500, 600, 700) including a pair of hooking parts (420, 420a, 420b, 420c, 430, 430a) inserted into the pair of through holes (2271, 2272) and disposed to surround the fixing portion (2273),
wherein the pair of hooking parts (420, 420a, 420b, 420c, 430, 430a) include each a locking protrusion (422, 422a, 422b, 422c, 432, 432a) disposed to cross each other such that at least a portion of the each locking protrusion is configured to overlap each other.

2. The foldable electronic device according to claim 1,
wherein the buffer member (400, 500, 600, 700) is disposed at corner portion (215a, 215b, 225a, 225b) of the protective cover (215, 225).

3. The foldable electronic device according to claim 1 or 2,
wherein the buffer member (400, 500, 600, 700) includes:
a cushion part (410) exposed to an outside of the protective cover (215, 225);
a first pole (421) protruding from one side (410b) of the cushion part (410) facing the protective cover (215, 225); and
a second pole (431) protruding from the one side (410b) of the cushion part (410) and spaced apart from the first pole (421).

4. The foldable electronic device according to claim 3,
wherein the locking protrusions (422, 422a, 422b, 422c, 432, 432a) include:
a first locking protrusion (422, 422a, 422b, 422c) extending from the first pole (421) in a first direction perpendicular to the first pole (421); and
a second locking protrusion (432, 432a) extending from the second pole (432) in a second direction perpendicular to the second pole (432) and opposite to the first direction.

5. The foldable electronic device according to claim 4,
wherein the first locking protrusion (422, 422a, 422b, 422c) and the second locking protrusion (432, 432a) are sequentially disposed along a third direction perpendicular to the first direction and the second directions.

6. The foldable electronic device according to any one of claims 1 to 5,
wherein each of the pair of hooking parts (420, 420a, 420b, 420c, 430, 430a) includes:
a locking side (4221, 4321) in contact with the fixing portion (2273); and
a guide side (4222, 4322) connected to the locking side (4221, 4321) and inclined with respect to the locking side (4221, 4321).

7. The foldable electronic device according to any one of claims 1 to 6,
wherein one of the pair of hooking parts (420, 420a, 420b, 420c, 430, 430a) includes fastening protrusion (423, 423a) protruding from one side (4223) facing the other hooking part (420, 420a, 420b, 420c, 430, 430a), and
the other one of the pair of fixing parts (420, 420a, 420b, 420c, 430, 430a) includes a fastening hole (433) into which the fastening protrusion (423, 423a) is inserted.

8. The foldable electronic device according to claim 7,
wherein the fastening protrusions (423a) includes a separation preventing portion (4322) having a tapered shape and provided at a free end of the fastening protrusion (423a) and gradually increasing in diameter from the free end to a fixed end.

9. The foldable electronic device according to any one of claims 1 to 6,
wherein each of the pair of fixing parts (420a, 430) includes fastening holes (424, 433) communicating with each other, and
wherein the buffer member (500) includes fastening pole (440) inserted through the fastening holes (424, 433).

10. The foldable electronic device according to any one of claims 7 to 9,
wherein at least one of the pair of hooking parts (420c, 430a) includes: bonding hole (425, 434) formed by recessing from guide side (4222, 4322) located on an opposite side of locking side (4221, 4321) in contact with the fixing portion (2273) and communicating with the fastening hole (433).

11. The foldable electronic device according to claim 10,
wherein the buffer member (700) includes a bonding member (B) injected into the bonding holes (425, 434) through a needle-shaped injection device and applied and filled along the bonding hole (425, 434) and the fastening hole (433).

12. The foldable electronic device according to claim 7,
wherein the fastening protrusion (423b) has a size smaller than a diameter of the fastening hole (433).

13. The foldable electronic device according to any one of claims 1 to 12,
wherein each of the first housing (210) and the second housing (220) includes support part (228) protruding from a bottom side facing the protective cover (215, 225) and in which the buffer member (400, 500, 600, 700) is seated if the protective cover (215, 225) and the housing (210, 220) are coupled.

14. The foldable electronic device according to claim 13,
wherein the support part (228) includes a recess portion (2281) and a pair of support protrusions (2282, 2283) protruding from each side of the recess protrusion (2281).

15. The foldable electronic device according to any one of claims 1 to 14,
wherein the protective cover (215, 225) includes a first protective cover (215) disposed along an edge of the first housing (210) and a second protective cover (225) disposed along the edge of the second housing (220), and
wherein the buffer member (400, 500, 600, 700) is disposed on at least one of the first protective cover (215) and the second protective cover (225) and contacts another protective cover (215 or 225), or a buffer member (400, 500, 600, 700) disposed on the other protective cover (215 or 225) when the electronic device 200 is in a folding state.

## Patentansprüche

1. Faltbare elektronische Vorrichtung, die Folgendes enthält:
ein erstes Gehäuse (210);
ein zweites Gehäuse (220), das mit dem ersten Gehäuse (210) durch ein Scharniermodul (240) drehbar verbunden ist;
eine Schutzabdeckung (215, 225), die entlang der Kanten der Gehäuse (210, 220) gekoppelt ist und ein Paar Durchgangslöcher (2271, 2272) und einen Befestigungsabschnitt (2273) enthält, der zwischen dem Paar Durchgangslöcher (2271, 2272) vorgesehen ist; und
ein Pufferelement (400, 500, 600, 700), das ein Paar Hakenteile (420, 420a, 420b, 420c, 430, 430a) enthält, die in das Paar Durchgangslöcher (2271, 2272) eingesetzt und so angeordnet sind, dass sie den Befestigungsabschnitt (2273) umgeben,
wobei das Paar Hakenteile (420, 420a, 420b, 420c, 430, 430a) jeweils einen Verriegelungsvorsprung (422, 422a, 422b, 422c, 432, 432a) enthalten, die so angeordnet sind, dass sie sich kreuzen, so dass zumindest ein Teil jedes Verriegelungsvorsprungs so konfiguriert ist, dass er sich mit dem anderen überlappt.

2. Faltbare elektronische Vorrichtung nach Anspruch 1,
wobei das Pufferelement (400, 500, 600, 700) an einem Eckabschnitt (215a, 215b, 225a, 225b) der Schutzabdeckung (215, 225) angeordnet ist.

3. Faltbare elektronische Vorrichtung nach Anspruch 1 oder 2,
wobei das Pufferelement (400, 500, 600, 700) Folgendes enthält:
ein Polsterteil (410), das zu einer Außenseite der Schutzabdeckung (215, 225) freiliegt;
einen ersten Pol (421), der aus einer Seite (410b) des Polsterteils (410) herausragt, die der Schutzabdeckung (215, 225) zugewandt ist; und
einen zweiten Pol (431), der aus der einen Seite (410b) des Polsterteils (410) herausragt und von dem ersten Pol (421) beabstandet ist.

4. Faltbare elektronische Vorrichtung nach Anspruch 3,
wobei die Verriegelungsvorsprünge (422, 422a, 422b, 422c, 432, 432a) Folgendes umfassen:
einen ersten Verriegelungsvorsprung (422, 422a, 422b, 422c), der sich von dem ersten Pol (421) in eine erste Richtung senkrecht zu dem ersten Pol (421) erstreckt; und
einen zweiten Verriegelungsvorsprung (432, 432a), der sich von dem zweiten Pol (432) in eine zweite Richtung senkrecht zu dem zweiten Pol (432) und entgegengesetzt zu der ersten Richtung erstreckt.

5. Faltbare elektronische Vorrichtung nach Anspruch 4,
wobei der erste Verriegelungsvorsprung (422, 422a, 422b, 422c) und der zweite Verriegelungsvorsprung (432, 432a) sequentiell entlang einer dritten Richtung senkrecht zu der ersten Richtung und der zweiten Richtung angeordnet sind.

6. Faltbare elektronische Vorrichtung nach einem der Ansprüche 1 bis 5,
wobei jedes des Paares von Hakenteilen (420, 420a, 420b, 420c, 430, 430a) Folgendes enthält:
eine Verriegelungsseite (4221, 4321), die mit dem Befestigungsteil (2273) in Kontakt steht; und
eine Führungsseite (4222, 4322), die mit der Verriegelungsseite (4221, 4321) verbunden ist und in Bezug auf die Verriegelungsseite (4221, 4321) geneigt ist.

7. Faltbare elektronische Vorrichtung nach einem der Ansprüche 1 bis 6,
wobei eines des Paares von Hakenteilen (420, 420a, 420b, 420c, 430, 430a) einen Befestigungsvorsprung (423, 423a) enthält, der aus einer Seite (4223) herausragt, die dem anderen Hakenteil (420, 420a, 420b, 420c, 430, 430a) zugewandt ist, und
das andere des Paares von Befestigungsteilen (420, 420a, 420b, 420c, 430, 430a) ein Befestigungsloch (433) enthält, in das der Befestigungsvorsprung (423, 423a) eingesetzt wird.

8. Faltbare elektronische Vorrichtung nach Anspruch 7,
wobei die Befestigungsvorsprünge (423a) einen Trennungsverhinderungsabschnitt (4322) enthalten, der eine konische Form aufweist und an einem freien Ende des Befestigungsvorsprungs (423a) vorgesehen ist, und dessen Durchmesser von dem freien Ende zu einem festen Ende allmählich zunimmt.

9. Faltbare elektronische Vorrichtung nach einem der Ansprüche 1 bis 6,
wobei jedes des Paares von Befestigungsteilen (420a, 430) Befestigungslöcher (424, 433) enthält, die miteinander in Verbindung stehen, und
wobei das Pufferelement (500) einen Befestigungspol (440) enthält, der durch die Befestigungslöcher (424, 433) eingesetzt wird.

10. Faltbare elektronische Vorrichtung nach einem der Ansprüche 7 bis 9,
wobei mindestens eines des Paares von Hakenteilen (420c, 430a) Folgendes enthält: ein Verbindungsloch (425, 434), das durch eine Aussparung von der Führungsseite (4222, 4322) gebildet wird, die sich auf einer gegenüberliegenden Seite der Verriegelungsseite (4221, 4321) befindet, die mit dem Befestigungsabschnitt (2273) in Kontakt steht und mit dem Befestigungsloch (433) in Verbindung steht.

11. Faltbare elektronische Vorrichtung nach Anspruch 10,
wobei das Pufferelement (700) ein Verbindungselement (B) enthält, das durch eine nadelförmige Injektionsvorrichtung in die Verbindungslöcher (425, 434) injiziert wird und entlang des Verbindungslochs (425, 434) und des Befestigungslochs (433) aufgetragen und gefüllt wird.

12. Faltbare elektronische Vorrichtung nach Anspruch 7,
wobei der Befestigungsvorsprung (423b) eine kleinere Größe als ein Durchmesser des Befestigungslochs (433) aufweist.

13. Faltbare elektronische Vorrichtung nach einem der Ansprüche 1 bis 12,
wobei sowohl das erste Gehäuse (210) als auch das zweite Gehäuse (220) ein Stützteil (228) enthalten, das aus einer der Schutzabdeckung (215, 225) zugewandten Unterseite herausragt und in dem das Pufferelement (400, 500, 600, 700) sitzt, wenn die Schutzabdeckung (215, 225) und das Gehäuse (210, 220) gekoppelt sind.

14. Faltbare elektronische Vorrichtung nach Anspruch 13,
wobei das Stützteil (228) einen Aussparungsabschnitt (2281) und ein Paar Stützvorsprünge (2282, 2283) enthält, die aus jeder Seite des Aussparungsvorsprungs (2281) herausragen.

15. Faltbare elektronische Vorrichtung nach einem der Ansprüche 1 bis 14,
wobei die Schutzabdeckung (215, 225) eine erste Schutzabdeckung (215), die entlang einer Kante des ersten Gehäuses (210) angeordnet ist, und eine zweite Schutzabdeckung (225) enthält, die entlang der Kante des zweiten Gehäuses (220) angeordnet ist, und
wobei das Pufferelement (400, 500, 600, 700) auf der ersten Schutzabdeckung (215) und/oder der zweiten Schutzabdeckung (225) angeordnet ist und mit einer anderen Schutzabdeckung (215 oder 225) oder einem Pufferelement (400, 500, 600, 700) in Kontakt steht, das auf der anderen Schutzabdeckung (215 oder 225) angeordnet ist, wenn sich die elektronische Vorrichtung 200 in einem gefalteten Zustand befindet.

## Revendications

1. Dispositif électronique pliable incluant :
un premier boîtier (210) ;
un deuxième boîtier (220) relié de manière rotative au premier boîtier (210) par un module de charnière (240) ;
un couvercle de protection (215, 225) couplé le long des bords des boîtiers (210, 220) et incluant une paire de trous traversants (2271, 2272) et une partie de fixation (2273) prévue entre la paire de trous traversants (2271, 2272) ; et
un élément tampon (400, 500, 600, 700) incluant une paire de pièces d'accrochage (420, 420a, 420b, 120c, 430, 430a) insérées dans la paire de trous traversants (2271, 2272) et disposées de manière à entourer la partie de fixation (2273),
où la paire de pièces d'accrochage (420, 420a, 420b, 420c, 430, 430a) inclut chacune une saillie de verrouillage (422, 422a, 422b, 422c, 432, 432a) disposée de manière à se croiser les unes les autres de telle sorte qu'au moins une partie de chaque saillie de verrouillage soit configurée pour se chevaucher les unes les autres.

2. Dispositif électronique pliable selon la revendication 1,
où l'élément tampon (400, 500, 600, 700) est disposé au niveau de la partie d'angle (215a, 215b, 225a, 225b) du couvercle de protection (215, 225).

3. Dispositif électronique pliable selon la revendication 1 ou 2,
où l'élément tampon (400, 500, 600, 700) inclut :
une partie de rembourrage (410) exposée à l'extérieur du couvercle de protection (215, 225) ;
un premier pôle (421) faisant saillie d'un côté (410b) de la partie de rembourrage (410) faisant face au couvercle de protection (215, 225) ; et
un deuxième pôle (431) faisant saillie d'un côté (410b) de la partie de rembourrage (410) et espacé du premier pôle (421).

4. Dispositif électronique pliable selon la revendication 3,
où les saillies de verrouillage (422, 422a, 422b, 422e, 432, 432a) incluent
:
une première saillie de verrouillage (422, 422a, 422b, 422c) s'étendant du premier pôle (421) dans une première direction perpendiculaire au premier pôle (421) ; et
une deuxième saillie de verrouillage (432, 432a) s'étendant du deuxième pôle (432) dans une deuxième direction perpendiculaire au deuxième pôle (432) et opposée à la première direction.

5. Dispositif électronique pliable selon la revendication 4,
où la première saillie de verrouillage (422, 422a, 422b, 422c) et la deuxième saillie de verrouillage (432, 432a) sont disposées séquentiellement le long d'une troisième direction perpendiculaire à la première direction et à la deuxième direction.

6. Dispositif électronique pliable selon l'une quelconque des revendications 1 à 5,
où chacune de la paire de pièces d'accrochage (420, 420a, 420b, 420c, 430, 430a) inclut :
un côté de verrouillage (4221, 4321) en contact avec la partie de fixation (2273) ; et
un côté guide (4222, 4322) relié au côté de verrouillage (4221, 4321) et incliné par rapport au côté de verrouillage (4221, 4321).

7. Dispositif électronique pliable selon l'une quelconque des revendications 1 à 6,
où l'une de la paire de pièces d'accrochage (420, 420a, 420b, 420c, 430, 430a) inclut une saillie de fixation (423, 423a) faisant saillie d'un côté (4223) faisant face à l'autre pièce d'accrochage (420, 420a, 420b, 420c, 430, 430a), et
l'autre de la paire de pièces de fixation (420, 420a, 420b, 420c, 430, 430a) inclut un trou de fixation (433) dans lequel est insérée la saillie de fixation (423, 423a).

8. Dispositif électronique pliable selon la revendication 7,
où les saillies de fixation (423a) incluent une partie empêchant la séparation (4322) ayant une forme conique et prévue à une extrémité libre de la saillie de fixation (423a) et dont le diamètre augmente progressivement de l'extrémité libre à une extrémité fixe.

9. Dispositif électronique pliable selon l'une quelconque des revendications 1 à 6,
où chacune de la paire de pièces de fixation (420a, 430) inclut des trous de fixation (424, 433) communiquant les uns avec les autres, et
où l'élément tampon (500) inclut un pôle de fixation (440) inséré à travers les trous de fixation (424, 433).

10. Dispositif électronique pliable selon l'une quelconque des revendications 7 à 9,
où au moins l'une de la paire de pièces d'accrochage (420c, 430a) inclut : un trou de liaison (425, 434) formé par évidement à partir du côté guide (4222, 4322) situé sur un côté opposé du côté de verrouillage (4221, 4321) en contact avec la partie de fixation (2273) et communiquant avec le trou de fixation (433).

11. Dispositif électronique pliable selon la revendication 10,
où l'élément tampon (700) inclut un élément de liaison (B) injecté dans les trous de liaison (425, 434) par l'intermédiaire d'un dispositif d'injection en forme d'aiguille et appliqué et rempli le long du trou de liaison (425, 434) et du trou de fixation (433).

12. Dispositif électronique pliable selon la revendication 7,
où la saillie de fixation (423b) a une taille inférieure au diamètre du trou de fixation (433).

13. Dispositif électronique pliable selon l'une quelconque des revendications 1 à 12,
où chacun du premier boîtier (210) et du deuxième boîtier (220) inclut une partie de support (228) faisant saillie depuis un côté inférieur faisant face au couvercle de protection (215, 225) et dans lequel l'élément tampon (400, 500, 600, 700) est logé lorsque le couvercle de protection (215, 225) et le boîtier (210, 220) sont accouplés.

14. Dispositif électronique pliable selon la revendication 13,
où la partie de support (228) inclut une partie en retrait (2281) et une paire de saillies de support (2282, 2283) faisant saillie de chaque côté de la partie en retrait (2281).

15. Dispositif électronique pliable selon l'une quelconque des revendications 1 à 14,
où le couvercle de protection (215, 225) inclut un premier couvercle de protection (215) disposé le long d'un bord du premier boîtier (210) et un deuxième couvercle de protection (225) disposé le long du bord du deuxième boîtier (220), et
où l'élément tampon (400, 500, 600, 700) est disposé sur au moins l'un parmi le premier couvercle de protection (215) et le deuxième couvercle de protection (225) et entre en contact avec un autre couvercle de protection (215 ou 225), ou un élément tampon (400, 500, 600, 700) disposé sur l'autre couvercle de protection (215 ou 225) lorsque le dispositif électronique 200 est dans un état plié.
